# EUROPEAN PATENT SPECIFICATION

(11) **EP 3 251 319 B1**
(45) Date of publication and mention of the grant of the patent: **20.11.2019**
(21) Application number: 15701047.1
(22) Date of filing: 27.01.2015
(51) Int. Cl.: H04L 29/06, H04L 29/08

(54) **CORRELATED PERSONALIZATION OF MULTIPLE COMMUNICATION SERVICES**
KORRELIERTE PERSONALISIERUNG VON MEHREREN KOMMUNIKATIONSDIENSTEN
PERSONNALISATION CORRÉLÉE DE MULTIPLES SERVICES DE COMMUNICATION

(43) Date of publication of application: 06.12.2017
(73) Proprietor: Telefonaktiebolaget LM Ericsson (publ), 164 83 Stockholm (SE)
(72) Inventor: NOLDUS, Rogier, August, Caspar, Joseph, NL-5052 BM Goirle (NL); KANDASAMY, Ramsundar, 52070 Aachen (DE)
(74) Representative: Ericsson
(86) International application number: PCT/EP2015/051626
(87) International publication number: WO 2016/119826

(56) References cited:
- EP-A2- 1 248 439
- US-A1- 2003 172 090
- BAZ CASTILLO J MILLAN VILLEGAS VERSATICA V PASCUAL QUOBIS I: "The WebSocket Protocol as a Transport for the Session Initiation Protocol (SIP); rfc7118.txt", THE WEBSOCKET PROTOCOL AS A TRANSPORT FOR THE SESSION INITIATION PROTOCOL (SIP); RFC7118.TXT, INTERNET ENGINEERING TASK FORCE, IETF; STANDARD, INTERNET SOCIETY (ISOC) 4, RUE DES FALAISES CH- 1205 GENEVA, SWITZERLAND, 29 January 2014 (2014-01-29), pages 1-25, XP015096724, [retrieved on 2014-01-29]

## Description

### Technical Field

The present invention relates to methods for controlling services in a communication network and to corresponding devices.

### Background

In communication networks, such as cellular networks as specified by 3GPP (3^{rd} Generation Partnership Project), it is known to provide various kinds of packet based services to a UE (user equipment). For example, in a 3GPP network such services may be provided by an architectural framework referred to as IMS (Internet Protocol Multimedia Subsystem). Details of the IMS are for example specified in 3GPP TS 23.228 V12.7.0 (2014-12). The IMS, but also various other kinds of packet based services, involve utilization of a control plane protocol referred to as SIP (Session Initiation Protocol), as specified in IETF RFC 3261 (June 2002), for establishing a session between a client utilizing the service and a server providing the service. Other examples of such services are web based services, e.g., utilizing HTTP (Hypertext Transfer Protocol) as specified in IETF RFC 7230 (June 2014).

In a cellular network supporting IMS, an IMS subscriber may establish an IP (Internet Protocol) based call, e.g., a voice call according to GSMA PRD IR.92 Version 8.0 (22 April 2014) or a video call according to GSMA PRD IR.94 Version 6.0 (03 May 2013) to a remote party. Such packet based call is controlled by a SIP session with the remote party. The remote party may be an individual subscriber, an enterprise, a service number, or the like. In such cases, the UE of the subscriber typically connects to a PDN-Gw (Packet Data Network Gateway) of the cellular network via a default bearer and an APN (Access Point Name) referred to as IMS APN. The default bearer of the IMS APN carries control plane (CP) traffic of the SIP session. A further connection between the UE and the PDN-Gw using the IMS APN is established via a dedicated bearer which carries the user plane (UP) traffic between the UE and the remote party. Further, the subscriber may also use an HTTP based communication service for communication with the remote party, e.g., via a web page hosted by the remote party. When the subscriber uses the UE to access such web page, typically a connection between the UE and the PDN-Gw based on a generic APN, referred to as internet APN is utilized. Traffic of the HTTP session for accessing the web page is routed from the PDN-Gw to the public internet. In such scenarios, there is no specific functional relation between the packet based call using the IMS and the HTTP session for accessing the web page. When the packet based call and the HTTP session are active at the same time, a corresponding traffic stream between the PDN-Gw and the IMS and a corresponding traffic stream between the PDN-Gw and the public internet run independently of one another.

In the case of the HTTP based communication service, it is possible to personalize the subscribers access to the communication service by the use of HTTP cookies, e.g., as specified in IETF RFC 6265 (April 2011). In this case, an HTTP client used by the subscriber for accessing an HTTP server, e.g., a web browser, receives one or more cookies from the HTTP server. The cookie is an information element carried in a provisional response or in a final response related to an HTTP Get transaction. For each HTTP Get transaction, a cookie may be transferred towards the HTTP client. The cookie is stored by the HTTP client and is utilized the next time an HTTP Get request is sent to the HTTP server. The cookie is strictly associated with a URL (Uniform Resource Locator) used in the HTTP Get transaction to identify the HTTP server. The HTTP server may utilize the information from the cookies to adapt a newly established HTTP session according to information collected during earlier HTTP sessions, e.g., by applying selections or other input made by the subscriber during the earlier HTTP sessions to the newly established HTTP session.

In IETF draft "SIP cookies" by D. Willis et al. (July 2001), the concept of cookies has also been proposed for SIP signaling. According to this proposal a header of a SIP message may contain a SIP cookie. This SIP cookie mechanism is described to be appropriate for uses where a non-terminal SIP node, (such as a proxy) needs to communicate application-specific information of a session, which is transiting the node. Within the same SIP session, this information may be utilized by other nodes receiving a message including the cookie. Unlike the HTTP cookies, the proposed SIP cookies are discarded by the UE when the call for which the SIP cookie was generated, as well as all derived calls, are terminated.

EP 1 248 439 A2 describes voice cookies for SIP based calls.

As can be seen, there may be scenarios where a subscriber utilizes multiple different communication services, e.g., a SIP based communication service and an HTTP based communication service, with the same remote party. However, there are only limited possibilities of personalizing such multiple communication services. For example, while the use of HTTP cookies may be used for personalizing an HTTP based communication service, this personalization will not improve the user experience for a SIP based communication service.

Accordingly, there is a need for techniques which allow for efficiently personalizing multiple communication services for a subscriber.

### Summary

The invention is defined in independent method claims 1 and 9, independent system claims 14 and 15 and in independent claims 16 and 17 both related to a computer program or computer program product. According to an embodiment of the invention, a method of controlling communication services in a communication network is provided. According to the method, a message of a first communication service is received from a service provider. On the basis of the received message of the first communication service, an information element for personalizing communication services is stored. The received message of the first communication service is then forwarded towards a subscriber. Further, a message of a second communication service is received from the subscriber. The stored information element is inserted into the received message of the second communication service. The received message of the second communication service with the inserted information element is then forwarded towards the service provider.

According to a further embodiment of the invention, a method of controlling communication services in a communication network is provided. According to the method, a first communication service is personalized for a subscriber. On the basis of the personalization of the first communication service, an information element for personalizing communication services is determined. The information element for personalizing communication services is inserted into a message of the first communication service. The message of the first communication service with the inserted information element is sent towards the subscriber. Further, a message of a second communication service utilized by the subscriber is received. The message of the second communication service includes the information element for personalizing communication services. On the basis of the information element for personalizing communication services received with the message of the second communication service, the second communication service is personalized for the subscriber.

According to a further embodiment of the invention, a system is provided. The system comprises a first proxy node for forwarding messages of a first communication service and a second proxy node for forwarding messages of a second communication service. The first proxy node is configured to receive a message of the first communication service from a service provider. Further, the first proxy node is configured to store, on the basis of the received message of the first communication service, an information element for personalizing communication services. Further, the first proxy node is configured to forward the received message of the first communication service towards a subscriber. The second proxy node is configured to receive a message of a second communication service from the subscriber. Further, the second proxy node is configured to insert the stored information element into the received message of the second communication service. Further, the second proxy node is configured to forward the received message of the second communication service with the inserted information element towards the service provider.

According to a further embodiment of the invention, a system is provided. The system comprises a first node for providing a first communication service and a second node for providing a second communication service. The first node is configured to personalize the first communication service for a subscriber. Further, the first node is configured to determine, on the basis of the personalization of the first communication service, an information element for personalizing communication services. Further, the first node is configured to insert the information element for personalizing communication services into a message of the first communication service. Further, the first node is configured to send the message of the first communication service with the inserted information element towards the subscriber. The second node is configured to receive a message of the second communication service utilized by the subscriber. The message of the second communication service includes the information element for personalizing communication services. Further, the second node is configured to, on the basis of the information element for personalizing communication services received with the message of the second communication service, personalize the second communication service for the subscriber.

According to a further embodiment of the invention, a computer program or computer program product is provided, e.g., in the form of a non-transitory storage medium, which comprises program code to be executed by at least one processor of a communication network system. Execution of the program code causes the at least one processor to receive a message of the first communication service from a service provider. Further, execution of the program code causes the at least one processor to store, on the basis of the received message of the first communication service, an information element for personalizing communication services. Further, execution of the program code causes the at least one processor to forward the received message of the first communication service towards a subscriber. Further, execution of the program code causes the at least one processor to receive a message of a second communication service from the subscriber. Further, execution of the program code causes the at least one processor to insert the stored information element into the received message of the second communication service. Further, execution of the program code causes the at least one processor to forward the received message of the second communication service with the inserted information element towards the service provider.

According to a further embodiment of the invention, a computer program or computer program product is provided, e.g., in the form of a non-transitory storage medium, which comprises program code to be executed by at least one processor of a service provider system. Execution of the program code causes the at least one processor to personalize the first communication service for a subscriber. Further, execution of the program code causes the at least one processor to determine, on the basis of the personalization of the first communication service, an information element for personalizing communication services. Further, execution of the program code causes the at least one processor to insert the information element for personalizing communication services into a message of the first communication service. Further, execution of the program code causes the at least one processor to send the message of the first communication service with the inserted information element towards the subscriber. Further, execution of the program code causes the at least one processor to receive a message of the second communication service utilized by the subscriber. The message of the second communication service includes the information element for personalizing communication services. Further, execution of the program code causes the at least one processor to, on the basis of the information element for personalizing communication services received with the message of the second communication service, personalize the second communication service for the subscriber.

Details of such embodiments and further embodiments will be apparent from the following detailed description of embodiments.

### Brief Description of the Drawings

Fig. 1 schematically illustrates architecture as applied according to an embodiment of the invention for providing multiple communication services in a communication network.
Fig. 2 shows an exemplary application scenario according to an embodiment of the invention.
Fig. 3 shows a signaling flow of exemplary processes according to an embodiment of the invention.
Fig. 4 and Fig. 5 show signaling flows for illustrating a further exemplary application scenario according to an embodiment of the invention.
Fig. 6 shows a flowchart for illustrating a method according to an embodiment of the invention, which may be implemented by a communication network system.
Fig. 7 shows a flowchart for illustrating a method according to an embodiment of the invention, which may be implemented by a service provider system.
Fig. 8 schematically illustrates a communication network system according to an embodiment of the invention.
Fig. 9 schematically illustrates a service provider system according to an embodiment of the invention.

### Detailed Description of Embodiments

In the following, concepts in accordance with exemplary embodiments of the invention will be explained in more detail and with reference to the accompanying drawings. The illustrated embodiments relate to personalization of multiple communication services which are accessible through a communication network. In the illustrated examples, it is assumed that the communication network is a cellular network as specified by 3GPP, and that the cellular network implements an IMS network for providing one or more of the communication services, while one or more other communication services are provided through the internet. However, it is to be understood that other network technologies, e.g., non-3GPP cellular network technologies, non-cellular wireless network technologies, or even wire-based network technologies could be applied as well. Further, the illustrated concepts may also be applied with respect to different communication services which are not based on the IMS.

In the illustrated concepts, an information element for personalizing the multiple communication services is indicated in messages of these communication services. After personalizing one of the communication services for a subscriber, the information element is stored in the communication network. When the subscriber subsequently accesses the same or another one of the communication services, the information element is inserted into a message of this communication service which is transmitted to a provider of the communication service, e.g., into a message for requesting establishment of a new session of the communication service. The storage of the information element and inserting the information element into the message to the subscriber may be accomplished by proxy nodes in the communication network. Upon receiving the message with the included information element, the service provider may utilize the information element for personalizing the provided communication service. The information element for personalizing the communication services may thus be inserted in messages of different communication services, i.e., across different communication service domains. Such communication services may for example be based on different protocols, e.g., such as HTTP on the one hand and SIP on the other hand. Similar to HTTP cookies, the information element is inserted into messages of the communication service. In the following the information element is therefore also referred to as cross domain cookie (CD cookie).

In the illustrated concepts, the CD cookie may be determined on the basis of a personalization of a first communication service, such as an HTTP based communication service provided by an HTTP server of a service provider. The HTTP server may determine the CD cookie depending on the personalization, e.g., depending on input or selections made by the subscriber during an HTTP session with the HTTP server. For example, the HTTP server may provide a web page which is available in different languages, and during the HTTP session the subscriber may select one of these languages. The personalization may in this case involve presenting the web page in the selected language to the subscriber. A parameter indicating the language selection of the subscriber may then be included in the CD cookie which is inserted into a message transmitted through the communication network from the HTTP server towards the subscriber. An HTTP proxy node for forwarding such messages between the subscriber and the HTTP server receives the message and stores the CD cookie, e.g., in a subscriber database of the communication network. Examples of such subscriber databases are a HSS (Home Subscriber Server) or an HLR (Home Location Register) as specified by 3GPP, or a multipurpose subscriber database combining functionalities of subscriber databases utilized by the communication network. In the case of a subsequent access to a second communication service, such as SIP based IMS communication service, provided by the same service provider, the stored CD cookie is retrieved. This may be accomplished by a SIP proxy forwarding SIP messages between the subscriber and the IMS. The first and the second communication service being provided by the same service provider can be identified on the basis of messages of these communication services. For example, a SIP INVITE message may include an R-URI (Request Uniform Resource Identifier) which may be utilized to identify the service provider. Similarly, an HTTP GET message may include a URL which may be utilized to identify the service provider. Such identifier(s) may also be included in the stored CD cookie and may be matched with the identifier in a received message to find the appropriate stored CD cookie.

The CD cookie may then be inserted into a message of the second communication service which is transmitted towards the service provider, e.g., into a SIP INVITE message. The second communication service may for example be a SIP based voice call to a service hotline of the service provider. The information indicated by the CD cookie may then be utilized for personalizing the second communication service for the subscriber, e.g., by selecting a language of automatic voice messages according to the language selection as made by the subscriber for the first communication session and/or by automatically connecting the voice call to a person speaking the selected language. In a similar manner, a personalization of the SIP based IMS service, such as a language selection, may also be applied to a subsequent usage of the HTTP based communication service. Since the CD cookie is stored in the communication network, this personalization may even be applied if the subscriber utilizes different devices for accessing the first communication service and the second communication service.

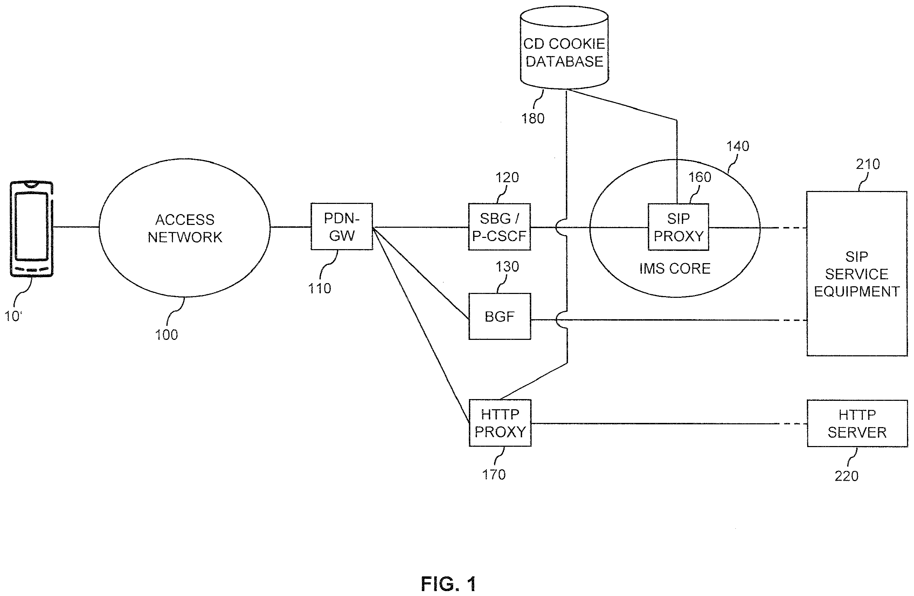

Fig. 1 illustrates an exemplary architecture of the communication network, which may be applied for implementing the concepts as outlined above. Specifically, Fig. 1 illustrates a UE 10' of the subscriber, infrastructure of the communication network, and equipment of the service provider.

The communication network infrastructure includes an access network 100, e.g., based on the LTE radio access technology, and elements of a core network, which include a PDN-Gw 110, an SBG (Session Border Gateway) / P-CSCF (Proxy Call Session Control Function) 120, a BGF (Border Gateway Function) 130, and an IMS core 140. The IMS core 140 may for example include an S-CSCF (Serving Call Session Control Function), a SIP AS (SIP Application Server), or other IMS nodes as for example specified in 3GPP TS 23.228. Further, the communication network infrastructure includes a SIP proxy 160 and an HTTP proxy 170, and a CD cookie database 180. The SIP proxy 160 may for example be implemented in the SIP AS of the IMS core 140. Alternatively, the SIP proxy 160 could be implemented in the S-CSCF, P-CSCF, or in some other IMS node. Also the HTTP proxy 170 may be provided as part of the IMS network or located at the boundary of the IMS network. The HTTP proxy 170 may for example be implemented in an SASN (Service Aware Support Node). The HTTP proxy 170 may be statically assigned to the subscriber. In some scenarios, also multiple HTTP proxies may be provided, a selection between these HTTP proxies may be performed dynamically, e.g., for each HTTP session. In the case of utilizing multiple HTTP proxies, each of these proxies may operate as described in the following for the HTTP proxy 170. The CD cookie database 180 has the purpose of acting as a centralized storage for CD cookies, which is accessible to both the SIP proxy 160 and the HTTP proxy 170. Access to the CD database may for example be implemented on the basis of LDAP (Lightweight Directory Access Protocol) as specified in IETF RFC 4510 (June 2006) and IETF RFC 4511 (June 2006). The SIP proxy 160, the HTTP proxy 170, and optionally also the CD cookie database 180 will the following also be referred to as operator system 150.

The service provider infrastructure includes a SIP service equipment, e.g., an IP multimedia telephony system, and an HTTP server 220, which are assumed to be operated by the same service provider.

Utilizing the UE 10', the subscriber may access different communication services provided by the service provider. In particular, the subscriber may access a SIP based communication service, e.g., a telephony based service, by establishing a SIP based communication session through the UE 10' and the IMS of the communication network with the SIP service equipment 210 of the service provider. For such SIP based communication session, CP traffic is routed through the access network 100, the PDN-Gw 110, the SBG / P-CSCF 120, and the IMS core 140 to the SIP service equipment 210 and vice versa. Specifically, the CP traffic is routed through the SIP proxy 160. UP traffic of the SIP based communication session is in turn routed through the access network 100, the PDN-Gw 110, and the BGF 130 to the SIP service equipment. The UP traffic may for example be based on the RTP (Real-Time Transport Protocol) as specified in IETF RFC 3550 (July 2003). Further, the subscriber may access an HTTP based communication service, e.g., a web page, by establishing an HTTP session through the UE 10" and the communication network with the HTTP server 220 of the service provider. In the case of the HTTP session, there is no differentiation between CP traffic and UP traffic, and all traffic of the HTTP session is routed through the access network 100, the PDN-Gw 110, and the HTTP proxy 170 to the HTTP server 220 and vice versa.

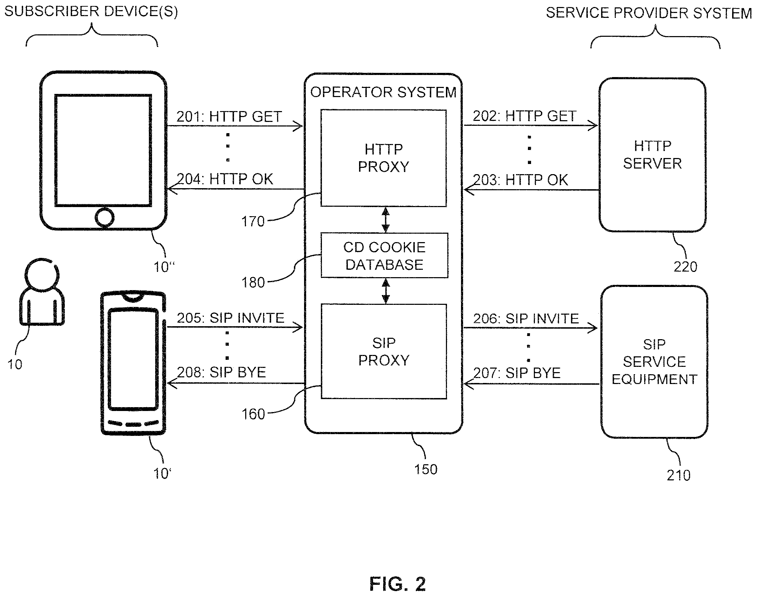

Fig. 2 illustrates an exemplary scenario in which the above-described architecture is applied for personalizing access to the SIP based communication service provided by the SIP service equipment 210 of the service provider and to the HTTP based communication service provided by the HTTP server 220 of the service provider. The combination of the SIP service equipment 210 and the HTTP server 220 is in the following also referred to as service provider system. In the illustrated example, it is assumed that the SIP based communication service corresponds to an IMS telephony call and that the HTTP based communication service corresponds to a web page access.

In the illustrated example, the subscriber 10 first accesses a web page of the service provider through the HTTP server 220, utilizing a first UE 10", such as a tablet computer, with connectivity to the communication network. As illustrated, this involves sending an HTTP GET message 201 towards the HTTP server 220. In the HTTP GET message 201, the HTTP server 220 is identified by a URL, e.g., "http://www.abc-stores.com". The HTTP GET message 201 is received by the HTTP proxy 170 and forwarded as message 202 to the HTTP server 220. In message 202, the HTTP proxy may also indicate to the HTTP server 220 that the CD cookie is supported for this subscriber, e.g., in a "supported" field of a header of the forwarded HTTP GET message.

During the HTTP session, a personalization is performed. For example, the subscriber may select a certain language, and the HTTP server 220 may adapt the presentation of the web page to the selected language. Further, the HTTP server 220 determines a CD cookie including information on the personalization, e.g., in the form of an indicator of the selected language. The HTTP server 220 includes the CD cookie into an HTTP message transmitted towards the subscriber, e.g., into HTTP OK message 203. The HTTP proxy 170 receives the HTTP OK message 203 and forwards it as message 204 to the first UE 10" of the subscriber 10. Further, the HTTP proxy 170 extracts the CD cookie from the HTTP OK message 203 and stores it in the CD cookie database 180. In message 204, the CD cookie may be removed.

At a later point in time, the subscriber 10 establishes an IMS telephony call to the SIP service equipment 210 of the service provider. This is accomplished through a second UE 10', e.g., an IMS enabled cellular phone with connectivity to the communication network. As illustrated, this involves sending a SIP INVITE message 205 towards the SIP service equipment 210. In the SIP INVITE message 205, the SIP service equipment 210 is identified by a R-URI, e.g., "sip:info@abc-stores.com". The SIP INVITE message 205 is received by the SIP proxy 160.

The SIP proxy 160 accesses the CD cookie database and, on the basis of the R-URI in the SIP INVITE message 205, identifies the CD cookie previously stored for this subscriber and this service provider. The SIP proxy 160 inserts the CD cookie into the received SIP INVITE message 205 and forwards the received SIP INVITE message 205 with the inserted CD cookie as message 206 towards the SIP service equipment 210.

The SIP service equipment 210 may utilize the information from the cookie for personalizing the IMS telephony call. For example, the SIP service equipment 210 may select the language of automatic voice messages played during the IMS telephony call according to the language indicated by the CD cookie. During the IMS telephony call, also further personalization may be performed by the SIP service equipment 210. For example, assuming that the service provider runs an online store in which orders can be performed either through the web page or through telephone calls handled by the SIP service equipment 210, a product category of interest may be determined by a user selection and be utilized to direct the IMS telephony call of the subscriber 10 to a corresponding contact person. When terminating the IMS telephony call, the SIP service equipment 210 may determine an updated version of the CD cookie and insert it into a SIP message towards the subscriber 10, e.g., into SIP BYE message 207. The SIP proxy 160 receives the SIP BYE message 207 and forwards it as message 208 to the second UE 10' of the subscriber 10. Further, the SIP proxy 160 extracts the updated CD cookie from the SIP BYE message 207 and stores it in the CD cookie database 180. In message 208, the CD cookie may be removed.

It is to be understood that the initial storage of the CD cookie may also be performed during an IMS telephony call. For example, the subscriber 10 may first establish an IMS telephony call to the SIP service equipment 210, and personalization may be performed for this IMS telephony call. The SIP proxy 160 may indicate in a forwarded SIP INVITE message to the SIP service equipment 210 that the CD cookie is supported for this subscriber. The SIP service equipment 210 may then determine a CD cookie and indicate in a SIP message towards the subscriber, and the SIP proxy forwarding this SIP message may extract the CD cookie from the SIP message and store it in the CD cookie database 180. The stored CD cookie may then be utilized for personalization of a subsequent HTTP session. Further, it is to be understood that the stored CD cookie may be utilized for personalization of any subsequent HTTP session the subscriber with the HTTP server 220 or of any subsequent IMS telephony call to the SIP service equipment 210, irrespective of whether the stored cookie was initially stored during an HTTP session or during an IMS telephony call.

Accordingly, the following scenarios may be distinguished:
In a first scenario, the subscriber establishes a SIP based communication session, e.g., an IMS telephony call, with the service provider, and no CD cookie is yet stored for the subscriber and the service provider. In this case, the SIP proxy 160 may include an indication in a SIP INVITE message forwarded to the service provider that the CD cookie is supported for this subscriber. After performing personalization of the SIP based communication session, the SIP service equipment 210 may then determine a CD cookie and insert it in a SIP message towards the subscriber. The SIP proxy 160 then extracts the CD cookie from the SIP message and stores it in the CD cookie database 180.

In a second scenario, the subscriber establishes an HTTP based communication session with the service provider, e.g., accesses a web page through the HTTP server 220, and no CD cookie is yet stored for the subscriber and the service provider. In this case, the HTTP proxy 170 may include an indication in an HTTP GET message forwarded to the service provider that the CD cookie is supported for this subscriber. After performing personalization of the HTTP based communication session, the HTTP server 220 may then determine a CD cookie an insert it in an HTTP message towards the subscriber. The HTTP proxy 170 then extracts the CD cookie from the HTTP message and stores it in the CD cookie database 180.

In a third scenario, the subscriber establishes a SIP based communication session, e.g., an IMS telephony call, with the service provider, and one or more CD cookies are already stored for the subscriber and the service provider. In this case, upon receiving a SIP INVITE message for establishing the SIP based communication session, the SIP proxy 160 identifies the stored CD cookie(s) on the basis of an R-URI indicated in the SIP INVITE message. Such CD cookie(s) may have been stored during an earlier SIP based communication session or during an earlier HTTP based communication session. The SIP proxy 160 inserts the indentified CD cookie(s) in the SIP INVITE message to be forwarded towards the SIP service equipment 210. The SIP service equipment 210 utilizes the CD cookie(s) to personalize the SIP based communication service. In some scenarios, also further personalization may be performed during the SIP based communication session, and the SIP service equipment 210 may update the CD cookie(s) or determine additional CD cookie(s) depending on this further personalization. The SIP service equipment 210 may insert the updated CD cookie and/or additional CD cookie(s) in a SIP message towards the subscriber. The SIP proxy 160 then extracts the updated CD cookie(s) and/or additional CD cookie(s) from the SIP message and stores these in the CD cookie database 180, replacing the previous version(s) of the respective CD cookie(s).

In a fourth scenario, the subscriber establishes an HTTP based communication session with the service provider, e.g., accesses a web page through the HTTP server 220, and one or more CD cookies are already stored for the subscriber and the service provider. In this case, upon receiving an HTTP GET message for establishing the HTTP based communication session, the HTTP proxy 170 identifies the stored CD cookie(s) on the basis of a URL indicated in the HTTP GET message. Such CD cookie(s) may have been stored during an earlier SIP based communication session or during an earlier HTTP based communication session. The HTTP proxy 170 inserts the indentified CD cookie(s) in the HTTP GET message to be forwarded towards the HTTP server 220. The HTTP server 220 utilizes the CD cookie(s) to personalize the HTTP based communication service. In some scenarios, also further personalization may be performed during the HTTP based communication session, and the HTTP server 220 may update the CD cookie(s) or determine additional CD cookie(s) depending on this further personalization. The HTTP server 220 may insert the updated CD cookie(s) and/or additional CD cookie(s) in an HTTP message towards the subscriber. The HTTP proxy 170 then extracts the updated CD cookie(s) and/or additional CD cookie(s) from the HTTP message and stores these in the CD cookie database 180, replacing the previous version(s) of the respective CD cookie(s).

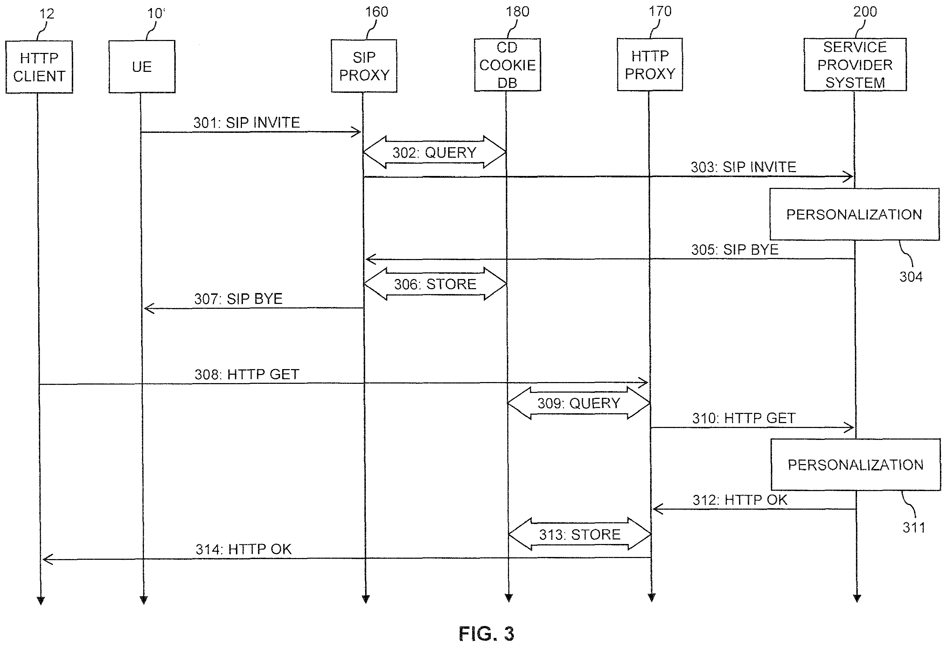

Fig. 3 shows a signaling diagram for illustrating exemplary processes in accordance with the above-described concepts. The illustrated processes involve the UE 10', e.g., an IMS enabled cellular phone, the SIP proxy 160, the HTTP proxy 170, the CD cookie database 180, and the service provider system 200. Further, the processes involve an HTTP client 12. The HTTP client may be part of the UE 10' or may be provided by another UE, such as the UE 10". In the processes of Fig. 3, the service provider system is assumed to provide functionalities of a service desk which can be accessed through telephone calls or a web page.

In the processes of Fig. 3, the subscriber establishes a SIP based communication session, e.g., a voice call, towards the service desk. This involves sending a SIP INVITE message 301 towards the service provider system 200. The SIP INVITE message includes an R-URI identifying the service provider system 200. The SIP proxy 160 receives the SIP INVITE message 301. Since the CD cookie is assumed to be supported for the SIP proxy 160 and the subscriber, the SIP proxy 160 proceeds with querying the CD cookie database 180, as illustrated by step 302. The CD cookie database 180 is organized in a subscriber specific manner and may contain one or more CD cookies for each subscriber. Further, the CD cookie database 180 may also contain other entries for each subscriber, e.g., an indication whether the CD cookie is supported for a given subscriber. The latter setting may be controlled by the subscriber, e.g., by providing a declaration of consent to utilization of the CD cookie. Such declaration of consent may be queried from the user at various occasions, e.g., when first registering in the IMS, when reconfiguring IMS settings, or when a communication service suitable for personalization by the CD cookie is established and the declaration of consent was not yet queried from the subscriber.

In step 302, the SIP proxy 160 queries the CD cookie database to check whether the entries of the CD cookie database 180 for this subscriber include a CD cookie associated with the R-URI in the SIP INVITE message 301. As mentioned above, the CD cookie database 180 may be implemented in a centralized manner and be accessed by the SIP proxy 160 through corresponding signaling, e.g., LDAP based signaling. However, it is also possible to integrate the SIP proxy 160 and the CD cookie database 180 within the same device and thus make the CD cookie database 180 accessible through internal signaling of such device. Further, if the CD cookie database 180 is external with respect to the SIP proxy 160, the SIP proxy 160 may also include a local cache for the information stored in the CD cookie database 180.

If the query of step 302 returns one or more CD cookies for the subscriber and the R-URI indicated in the SIP INVITE message 301, the SIP proxy 160 inserts the CD cookie(s) into the SIP INVITE message 301 and forwards the SIP invite message with the included CD cookie(s) as message 303 towards the service provider system 200. If the query 302 of step 302 returns no CD cookie for the subscriber and the R-URI indicated in the SIP INVITE message 301, the SIP proxy 160 will not include a CD cookie into the forwarded message 303 towards the service provider system 200. In this case, the forwarded message 303 may however include an indication whether the CD cookie is supported for the SIP proxy 160 and the subscriber.

Upon receiving the forwarded SIP INVITE message 303, the service provider system 200 establishes the SIP based communication session. Further, as indicated by step 304, the service provider system 200 personalizes the SIP based communication session. If one or more CD cookies are included in the forwarded SIP INVITE message 303 received by the service provider system 200, the personalization of step 304 may be based on the CD cookie(s). In addition, the personalization may be based on processing of information collected during the SIP based communication session, e.g., on interactive input or selections by the subscriber or evaluation of other data related to the SIP based communication session. If no CD cookie is included in the forwarded SIP INVITE message 303, the personalization may be based on processing of information collected during the SIP based communication session, e.g., on interactive input or selections by the subscriber or evaluation of other data related to the SIP based communication session. In the course of the personalization, the service provider system 200 may also determine one or more CD cookies which indicate corresponding personalization information, e.g., selection of a language or product category. The determined CD cookie(s) may correspond to updated versions of the CD cookie(s) included in the forwarded SIP INVITE message 303 or may be newly determined.

At some point, the SIP based communication session is terminated, and the service provider system 200 sends a corresponding SIP message 305 towards the subscriber. In the illustrated scenario, the SIP based communication session is assumed to be terminated by the service provider system 200, and the SIP message 305 corresponds to a SIP BYE message. However, it is to be understood that termination of the SIP based communication session could also be initiated by the subscriber. In such case, the SIP message 305 may correspond to a SIP OK message sent in response to a SIP BYE message.

The service provider system 200 includes the CD cookie(s) determined during the personalization of step 304 into the SIP message 305 sent towards the subscriber.

The SIP proxy 160 receives the SIP message 305, extracts the included CD cookie(s) and stores the CD cookie(s) in the CD cookie database 180, as illustrated by step 306. The storage of the CD cookie(s) is performed in a subscriber specific manner, i.e., in one or more entries related to the subscriber. Further, the stored CD cookie(s) also indicate the associated service provider, e.g., by including a corresponding identifier. This identifier may for example be based on the R-URI as used in the SIP INVITE message 301 or on a URL associated with the service provider. For example, the CD cookie could include the R-URI as used for SIP based communication services with the service provider system 200 and/or a corresponding telephone number, and a URL as used for HTTP based communication services with the service provider system 200.

As further illustrated by message 307, the SIP proxy 160 forwards the SIP message 305 towards the subscriber. In message 307, the CD cookie(s) included in SIP message 305 may be removed. Accordingly, no specific functionalities for handling the CD cookie(s) are required in the UE 10' receiving the forwarded SIP message 307.

At a later point in time, the subscriber establishes an HTTP based communication session with the service desk using the HTTP client 12, e.g., accesses a web page of the service desk. This involves sending an HTTP GET message 308 towards the service provider system 200. The HTTP GET message 308 includes a URL identifying the service provider system 200. The HTTP proxy 170 receives the HTTP GET message 308. Since the CD cookie is assumed to be supported for the HTTP proxy 170 and the subscriber, the HTTP proxy 170 proceeds with querying the CD cookie database 180, as illustrated by step 309. In step 309, the HTTP proxy 170 queries the CD cookie database 180 to check whether the entries of the CD cookie database 180 for this subscriber include a CD cookie(s) associated with the URL in the HTTP GET message 308. In the illustrated example this is assumed to be the case at least due to the CD cookie(s) stored in step 306. As mentioned above, the CD cookie database 180 may be centralized or integrated with the SIP proxy 160 and accessed by the HTTP proxy 170 through corresponding signaling, e.g., LDAP based signaling. In some implementations, it is also possible to integrate the HTTP proxy 170 and the CD cookie database 180 within the same device and thus make the CD cookie database 180 accessible through internal signaling of such device. In that case, the above-mentioned signaling with the SIP proxy 160 may be performed with respect to such integrated device. Further, if the CD cookie database 180 is external with respect to the HTTP proxy 170, the HTTP proxy 170 may also include a local cache for the information stored in the CD cookie database 180.

The HTTP proxy 170 inserts the CD cookie(s) returned by the query of step 309 into the received HTTP GET message 308 and forwards the HTTP GET message with the included CD cookie(s) as message 310 towards the service provider system 200.

Upon receiving the forwarded HTTP GET message 310, the service provider system 200 establishes the HTTP based communication session. Further, as indicated by step 311, the service provider system personalizes the HTTP based communication session. This personalization is based on the CD cookie(s) included in the forwarded HTTP GET message 310. In addition, the personalization may be based on processing of information collected during the HTTP based communication session, e.g., on interactive input or selections by the subscriber or evaluation of other data related to the HTTP based communication session. In the course of the personalization of step 311, the service provider system 200 may also determine one or more CD cookies which indicate corresponding personalization information, e.g., selection of a language or product category. The determined CD cookie(s) may correspond to updated versions of the CD cookie(s) included in the forwarded HTTP GET message 310 or may be newly determined.

At some point, the service provider system 200 sends an HTTP message 312 towards the subscriber. In the illustrated scenario, this HTTP message 312 is assumed to be an HTTP OK message. The HTTP message 312 may for example contain content requested by the HTTP client 12. In other cases, the HTTP message 312 may acknowledge a request from the HTTP client 12. The HTTP message 312 may be a final message of the HTTP based communication session or a message transmitted at some earlier time during the HTTP based communication session. The service provider system 200 includes the CD cookie(s) determined during the personalization of step 311 into the HTTP message 312 sent towards the subscriber.

The HTTP proxy 170 receives the HTTP message 312, extracts the included CD cookie(s) and stores the CD cookie(s) in the CD cookie database 180, as illustrated by step 313. The storage of the CD cookie(s) is performed in a subscriber specific manner, i.e., in one or more entries related to the subscriber. Further, the stored CD cookie(s) also indicate the associated service provider, e.g., by including a corresponding identifier. This identifier may for example be based on the URL as used in the HTTP GET message 308 or on the R-URI associated with the service provider. For example, the CD cookie(s) could include the R-URI as included in the SIP INVITE message 301 and/or a corresponding telephone number, and the URL as included in the HTTP GET message 308.

As further illustrated by message 314, the SIP proxy 160 forwards the HTTP message 312 towards the subscriber. In message 314, the CD cookie(s) included in HTTP message 312 may be removed. Accordingly, no specific functionalities for handling the CD cookie(s) are required in the HTTP client 12 receiving the forwarded HTTP message 314.

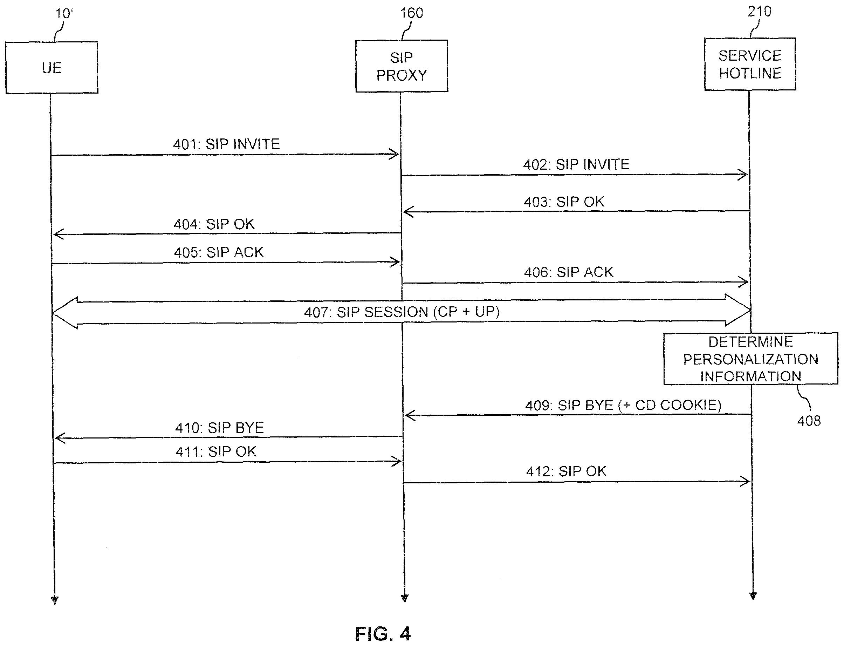

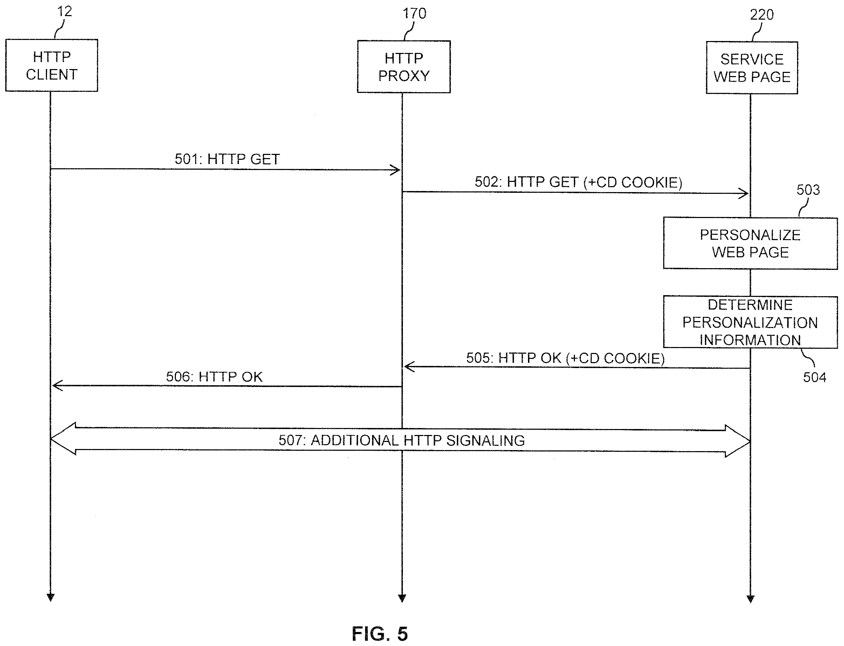

Fig. 4 and Fig. 5 illustrate further details of the processes in an exemplary application scenario Specifically, Fig. 4 shows an example of processes of the signaling during a SIP based communication session, and Fig. 5 shows further details of the signaling of an HTTP based communication session. In the processes of Fig. 4 and Fig. 5, it is assumed that the SIP based communication service is a voice call to a service hotline of the service desk and the HTTP based communication service is a subsequent access to a web page of a service desk.

As illustrated in Fig. 4, the UE 10' sends a SIP INVITE message 401 towards the SIP service equipment 210 providing the service hotline. The SIP service equipment 210 is identified by an R-URI in the SIP INVITE message 401, e.g., in the form of "sip:info@abc-stores.com". Assuming that no cookie is stored for the subscriber and the service desk, the SIP proxy 160 forwards the SIP INVITE message 401 without inserting a CD cookie, as indicated by forwarded SIP message 402. The SIP service equipment 210 providing the service hotline receives the forwarded SIP INVITE message 402 and proceeds with the establishment of the SIP based communication session by responding with a SIP OK message 403. The SIP proxy 160 forwards the SIP OK message 403 to the UE 10', as indicated by forwarded SIP OK message 404. The UE 10' reacts by sending a SIP ACK 405 towards, which is forwarded by the SIP proxy 160 to SIP service equipment 210, as indicated by forwarded SIP message 406. Establishment of the SIP based communication session is then complete, and communication of CP and UP traffic of the SIP based communication session may be performed between the UE 10' and the SIP service equipment 210, as indicated by step 407. Here, it is to be understood that the CP traffic will be routed through the SIP proxy 160, while a different route may be utilized for the UP traffic.

As further illustrated by step 408, the SIP service equipment 210 determines personalization information. This may be accomplished on the basis of the CP traffic and/or UP traffic of the SIP based communication session. This may also involve collecting interactive input or selections by the subscriber. On the basis of the personalization information, the SIP based communication session may be controlled, e.g., by selecting an appropriate interactive voice menu. Further, the SIP service equipment 210 determines a CD cookie which is based on the personalization information.

As further illustrated, the SIP based communication session is then terminated by the SIP service equipment 210, which involves sending a SIP BYE message 409 towards the subscriber. The SIP proxy 160 receives the SIP BYE message 409 including the CD cookie, extracts the CD cookie, and stores the CD cookie in the CD cookie database. For later identification, the CD cookie is stored together with an identifier of the service provider, e.g., the R-URI or a part thereof, such as a domain name part of the R-URI, in the presently discussed example "abc-stores.com".

The SIP proxy 160 then forwards the SIP BYE message 409 to the UE 10', as indicated by forwarded SIP BYE message 410. As illustrated, the SIP proxy 160 removes the CD cookie from the forwarded SIP BYE message 410, i.e., the SIP BYE message 409 is forwarded without the CD cookie.

The termination of the SIP based communication session is then completed by the UE 10' sending a SIP OK message 411, which is forwarded by the SIP proxy 160 to the SIP service equipment 210, as indicated by forwarded SIP OK message 412.

After the processes of Fig. 4, the subsequent access to the web page of the service desk involving the processes of Fig. 5 is performed. The access to the web page is assumed to be performed through an HTTP client 12. The HTTP client may be implemented in the UE 10' used in the processes of Fig. 4, or may be implemented in a different UE, such as the above-mentioned UE 10".

As illustrated in Fig. 5, the HTTP client 12 sends an HTTP GET message 501 towards the HTTP server 220 hosting the web page of the service desk. The HTTP server 220 is identified by a URL in the HTTP GET message 501, e.g., in the form of "http://www.abc-stores.com". The HTTP proxy 170 receives the HTTP GET message 501 and identifies the CD cookie previously stored for this subscriber and service provider. For example, this identification may be based on an identifier of the service provider, such as the URL or a part thereof. For example, the CD cookie may be identified on the basis of the domain name part of the URL, which is also part of the R-URI used in the SIP INVITE message 401.

The HTTP proxy 170 inserts the CD cookie into the received HTTP GET message 501 and forwards the HTTP GET message with the inserted CD cookie to the HTTP server 220, as indicated by forwarded HTTP message 502.

As indicated by step 503, the HTTP server 220 personalizes the web page of the service desk depending on the CD cookie received with the forwarded HTTP GET message 502. This may for example involve making a corresponding selection of a menu on the web page or a corresponding language selection for presentation of the web page.

As indicated by step 504, the HTTP server 220 may also determine further personalization information, e.g., depending on data associated with the subscriber's ongoing access to the web page hosted by the HTTP server 220. Depending on the further personalization information, the HTTP server may update the CD cookie received with the forwarded HTTP GET message 502 or determine a new CD cookie.

The HTTP server 220 then responds to the HTTP GET message 502 by sending an HTTP OK message 505 towards the subscriber. As illustrated, the HTTP OK message 505 may include the (updated and/or new) CD cookie determined by the HTTP server 220. The HTTP OK message 505 may also include content requested by the HTTP client 12 in the HTTP GET message 501.

The HTTP proxy 170 receives the HTTP OK message 505 including the CD cookie, extracts the CD cookie, and stores the CD cookie in the CD cookie database. For later identification, the CD cookie is stored together with an identifier of the service provider, e.g., the URL or a part thereof, such as a domain name part of the URL, in the illustrated example "abc-stores.com".

The HTTP proxy 170 then forwards the HTTP OK message 505 to the HTTP client 12, as indicated by forwarded HTTP OK message 506. As illustrated, the HTTP proxy 170 removes the CD cookie from the forwarded HTTP OK message 506, i.e., the HTTP OK message 505 is forwarded without the CD cookie.

Subsequently, the HTTP session associated with the subscribers access to the web page hosted by the HTTP server 220 may continue, as illustrated by additional HTTP signaling 507. Such additional HTTP signaling may also be used for further updating the stored CD cookie or determining further new CD cookies.

In the above examples, access to the CD cookie database 180 is performed in a subscriber specific manner. For this purpose, the SIP proxy 160 or HTTP proxy 170 may need to identify the subscriber. This may be achieved in various ways.

For example, in cases where the HTTP communication session is established through a cellular network connection, the HTTP proxy 170 may implicitly identify the subscriber on the basis of the cellular network connection. For example, the cellular connection may be established between the UE of the subscriber, such as the UE 10' of Fig. 1 or the UE 10" of Fig. 2 and a gateway of the cellular network, such as the PDN-Gw 110 or a GGSN (GPRS Gateway Support Node) of a 3G cellular network. In this case, the gateway would also be aware of the subscriber identity. The HTTP proxy 170 may thus obtain the subscriber identity from the gateway. For example, the gateway could include the subscriber identity into an HTTP message forwarded to the HTTP proxy 170, such as into HTTP GET message 308 or HTTP GET message 501. In some implementations, the HTTP proxy 170 may also be integrated with such gateway. Since both the gateway and the HTTP proxy are operated by the operator of the cellular network operator, security issues in handling the subscriber identity can be avoided.

In cases where the HTTP communication session is established through another data connection than the cellular network connection, e.g., a WLAN connection, the HTTP proxy 170 may apply an authentication mechanism when HTTP traffic of the subscriber is routed through the HTTP proxy 170. For example, such authentication mechanism may be based on HTTP Digest according to IETF RFC 2617. According to such authentication mechanism, when HTTP traffic of the subscriber is for the first time routed through the HTTP proxy 170, a challenge and a response may be generated, e.g., based on a user name and password of the subscriber. When the subscriber is authenticated on the basis of the challenge and response, the HTTP proxy 170 provides an HTTP cookie in an HTTP message towards the HTTP client used by the subscriber. The HTTP cookie indicates the subscriber identity, typically in encrypted form. The next time the subscriber sends an HTTP message to the same URL, the HTTP client inserts the HTTP cookie into the HTTP message. By extracting the HTTP cookie from the HTTP message, the HTTP proxy may then determine the subscriber identity.

In case of the SIP proxy 160, awareness of the subscriber identity may be achieved in a similar manner. However, in typical scenarios conventional functionalities of the SIP proxy 160 in the IMS network may already imply awareness of the subscriber identity. For example, if the SIP proxy 160 is implemented as a P-CSCF, S-CSCF, or SBG, the conventional functionalities of such nodes in the IMS network will also include awareness of the subscriber identity.

As further mentioned above, the subscriber may need to provide a declaration of consent to enable the utilization of the CD cookie. This may be achieved in various ways.

For example, when the subscriber accesses the HTTP server 220 in an HTTP based communication session, the HTTP server 220 may initiate interaction with the subscriber to explicitly request the declaration of consent from the subscriber, similar to the handling of HTTP cookies.

When the user establishes a SIP based communication session, the way of obtaining the declaration of consent for the utilization of the CD cookie may depend on the implementation of the utilized SIP based communication service.

For example, in some scenarios the SIP based communication session may be established through a WebRTC (Web Real-Time communication) framework according to WebRTC 1.0 or later version, W3C Editor's Draft (05 December 2014) and a WebRTC application downloaded to the UE. In such case, the SIP based communication session may be established via a Web communication gateway (WCG). The subscriber applies a REST (Representational State Transfer) procedure towards the WCG, and the WCG translates between HTTP (between the subscriber and the WCG) and SIP (between the WCG and the IMS network). The SIP signaling from the IMS network, such as a SIP OK, may then contain a URL that points to a web page of that same service provider. The WebRTC application utilized by the subscriber may be configured to launch a browser upon receiving the URL in the response message translated by the WCG. Via the web page, the subscriber may provide the declaration of consent for the utilization of the CD cookie.

In other example, the SIP based communication session may be supplemented by an HTTP based service component. When the subscriber establishes the SIP based communication session, at the same time an HTTP session towards a designated URL may be established. Via this HTTP session, the subscriber may provide the declaration of consent for the utilization of the CD cookie.

In the above examples, it was assumed that the SIP based communication session is established towards a remote end point identified by a URI (Uniform Resource Identifie) including a domain name which is also included on the URL used in the HTTP based communication session. However, in some cases the SIP based communication session may also be established towards a remote end point identified by a telephone number. In such cases, additional measures may be taken to assist identification of the CD cookie stored during such SIP based communication session in a subsequent HTTP based communication session.

For example, such additional measures may involve that the SIP service equipment 210 or HTTP server 220 generates the CD cookie to include an identifier of the service provider which is universal for both the SIP based communication service and the HTTP based communication service. One example of such universal identifier would be a domain name. The domain name associated with the telephone number used for accessing the SIP based communication service may be configured in the SIP service equipment 210 and included in the CD cookie even if the SIP based communication session was initiated with a telephone number. On the basis of such identifier, the CD cookie may later by identified by the HTTP proxy 170.

Further, a domain name transcription may be utilized in the CD cookie as an identifier of the service provider. For example, the CD cookie may have the form: "Set-cookie: Set-Cookie: Session="q85r"; State="hdg22"; Domain=.abc-stores.com; Domain=.4.3.2.1.0.0.8.0.1.3.e164.arpa". In this example, the last part of the CD cookie is assumed to correspond to a domain name transcription of the telephone number "+318001234" according to IETF RFC 3761 (April 2004). The SIP proxy 160 may then transcribe the telephone number in the R-URI of the SIP INVITE message into 4.3.2.1.0.0.8.0.1.3.e164.arpa and utilize this transcription to identify the stored CD cookie. As can be seen from the above example, both the domain name and the domain name transcription may be included in the CD cookie to facilitate identification of the CD cookie irrespective of the form of the R-URI in the SIP INVITE message.

While in the above examples it was assumed that the UE 10' establishing the SIP based communication service is IMS enabled and directly sends the SIP INVITE message for establishing the SIP based communication session, this is not required in all scenarios. For example, the SIP based communication session may also be initiated by a circuit switched voice call from the UE 10'. In that case, a gateway for translation between circuit switched voice telephony and IMS based voice telephony may issue the SIP INVITE message initiating the voice call.

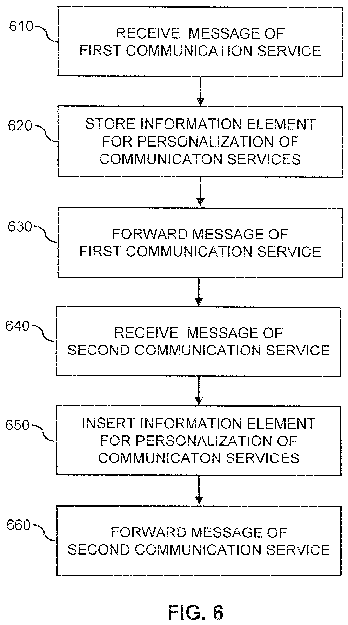

Fig. 6 shows a flowchart for illustrating a method which may be utilized for implementing the illustrated concepts. The method may be applied for controlling multiple communication services in a communication network. These communication services may in particular include one or more SIP based communication services and one or more HTTP based communication services. Accordingly, these services may be based on different communication protocols. The method of Fig. 6 may be performed by a system in the communication network, such as the above-mentioned operator system 150 including the SIP proxy 160, the HTTP proxy 170, and optionally also the CD cookie database 180. If a processor-based implementation of such system is used, the steps of the method may be performed by one or more processors of the system.

At step 610, a message of a first communication service utilized by a subscriber is received from a service provider. Examples of such message are given by the above-mentioned HTTP OK message 203, SIP BYE message 305, or SIP BYE message 409. The message of step 610 may be received by a first proxy node responsible for forwarding messages of the first communication service. For example, the first proxy node may correspond to the above-mentioned SIP proxy 160 or HTTP proxy 170.

At step 620, an information element for personalizing communication services is stored. This accomplished on the basis of the message received at step 610. If the message of step 610 was received by the first proxy node, also the storing of information element may be accomplished by the first proxy node. The information element may be included in the message received at step 610. The process of storing the information element may then also involve and extracting the information element from the received message. An example of the information element is given by the above mentioned CD cookie.

The information element may be stored in a subscriber-specific manner, e.g., in database organized with separate entries for different subscribers of the communication network.

Accordingly, the stored information element may later be retrieved when the same subscriber accesses the same or another communication service.

In some scenarios, an indication of consent, e.g., in the form of the above-mentioned declaration of consent, may be obtained from the subscriber and the information element may be stored only in response to the indication of consent by the subscriber.

At step 630, the received message of the first communication service is forwarded towards the subscriber, e.g., to a client device utilized by the subscriber for accessing the first communication service. If the information element is included in the message received at step 610 and extracted therefrom, forwarding of the message at step 630 may be performed without the information element, i.e., the information element may be removed before forwarding the message.

At step 640, a message of a second communication service is received from the subscriber. The second communication service is different from the first communication service. For example, one of the first communication service and the second communication service may be a SIP based communication service, while the other of the first communication service and the second communication service is an HTTP based communication service. Examples of the message received at step 640 are given by the above-mentioned SIP INVITE message 205, HTTP GET message 308, and HTTP GET message 501. The message of step 640 may be received by a second proxy node responsible for forwarding messages of the second communication service. For example, the second proxy node may correspond to the above-mentioned SIP proxy 160 or HTTP proxy 170.

At step 640, the message of the second communication device may be received from the same client device to which the message of the first communication service was forwarded at step 630. Alternatively, the message of the second communication service may be received from a different client device. For example, in a scenario as illustrated in Fig. 2, the message of the first communication service could be forwarded to a client device corresponding to the UE 10" and the message of the second communication service could be received from a client device corresponding to the UE 10'.

At step 650, the stored information element is inserted into the message received at step 640. For this purpose, the stored information element may be retrieved. This may be accomplished on the basis of an identifier of the service provider included in the information element. Such identifier may be based on a URI, a telephone number, a domain name, or a transcribed domain name. For example, the identification of the stored information element may involve comparison of the identifier of the service provided in the stored information element to an identifier of the service provider in the message received at step 640.

Further, retrieving the stored information element may also involve identifying the subscriber. For example, the subscriber may be identified on the basis of a data connection utilized at step 630 for forwarding the message of the first communication service towards the subscriber and/or on the basis of a data connection utilized at step 640 for receiving the message of the second communication service from the subscriber. In particular, such data connection may be a cellular network connection for which the identity of the subscriber is implicitly known to nodes of the communication network. In addition or as an alternative, the subscriber may be identified on the basis of authentication information included in the message of the first communication service received at step 610 and/or in the message of the second communication service received at step 640, e.g., using an authentication mechanism based on HTTP Digest or the like.

At step 650, the message of the second communication service with the inserted information element is forwarded towards the service provider. At the service provider, a system or node which receives the forwarded message may then utilize the information element in the forwarded message for personalizing the second communication service for the subscriber.

If at step 640 the message of the second communication service was received by the second proxy node, also the inserting of the information element of step 650 and forwarding of the message are performed by the second proxy node.

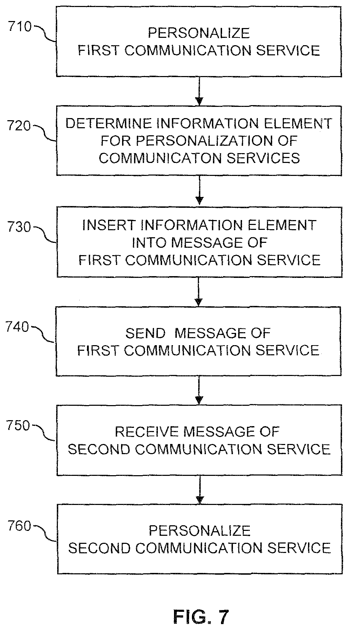

Fig. 7 shows a flowchart for illustrating a further method which may be utilized for implementing the illustrated concepts on the service provider side. The method may be applied for controlling multiple communication services in a communication network. These communication services may in particular include one or more SIP based communication services and one or more HTTP based communication services. Accordingly, these services may be based on different communication protocols. The method of Fig. 7 may be performed by a system operated by the service provider, such as the above-mentioned service provider system 200 including the SIP service equipment 210 and the HTTP server 220. If a processor-based implementation of such system is used, the steps of the method may be performed by one or more processors of the system.

At step 710, a first communication service is personalized for a subscriber utilizing the first communication service. This may for example be accomplished on the basis of data collected during a session of the first communication service, e.g., data reflecting input or selections by the subscriber. The personalization may for example be based on a language selection, selection of a product category, or the like.

At step 720, an information element for personalizing communication services is determined. This is accomplished on the basis of the personalization of the first communication service at step 710. For example, the information element may be determined to include one or more parameters indicative of the personalization of step, e.g., indicating a selected language or product category. An example of the information element is given by the above-mentioned CD cookie. Further, the information element may be determined to include an identifier of the service provider. Such identifier of the service provider may be based on a URI, a telephone number, a domain name, or a transcribed domain name.

At step 730, the information element determined at step 720 is inserted into a message of the first communication service. Examples of such message are given by the above-mentioned HTTP OK message 203, SIP message 305, or SIP BYE message 409.

At step 740, the message of the first communication service with the inserted information element is sent towards the subscriber.

The personalization of step 710, the determination of the information element of step 720, the inserting of step 730, and the sending of step 740 may be performed by a first node responsible for providing the first communication service, such as the above-mentioned SIP service equipment 210 or the above-mentioned HTTP server 220.

At step 750, a message of a second communication service utilized by the subscriber is received. The second communication service is different from the first communication service. For example, one of the first communication service and the second communication service may be a SIP based communication service, while the other of the first communication service and the second communication service is an HTTP based communication service. Examples of such message are given by the above-mentioned SIP INVITE message 206, HTTP GET message 310, and HTTP GET message 502. The message received at step 750 includes the information element for personalizing communication services as determined at step 720.

At step 750, the message of the second communication device may originate from the same client device towards which the message of the first communication service was sent at step 740. Alternatively, the message of the second communication service may be received from a different client device. For example, in a scenario as illustrated in Fig. 2, the message of the first communication service could be sent towards to a client device corresponding to the UE 10" and the message of the second communication service could originate from a client device corresponding to the UE 10'.

At step 760, the second communication service is personalized for the subscriber. This is accomplished on the basis of the information element received in the message of step 750. The personalization may for example be based on a language selection, selection of a product category, or the like, as indicated by the information element.

The receiving of the message of step 750 and personalizing of the second communication service of step 760 may be performed by a second node responsible for providing the second communication service, such as the above-mentioned SIP service equipment 210 or the above-mentioned HTTP server 220

It is to be understood that the methods of Fig. 6 and Fig. 7 may be combined in a system including a communication network operator system operating according to the method of Fig. 6 and a service provider system operating according to the method of Fig. 7.

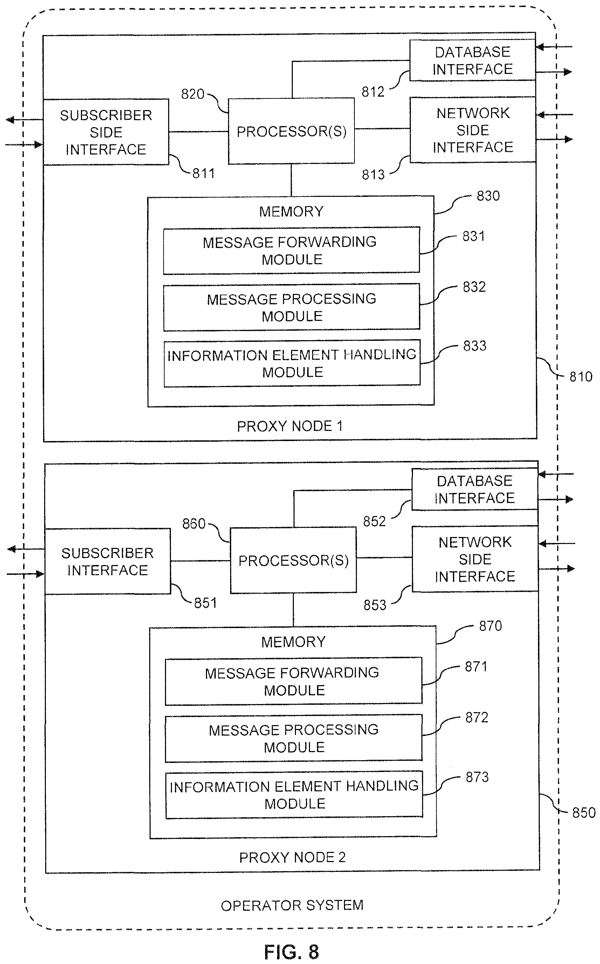

Fig. 8 illustrates exemplary structures which may be used for implementing the above concepts in a communication network operator system, such as the above-mentioned operator system 150. In particular, Fig. 8 illustrates a processor based implementation of a communication network operator system including a first proxy node 810 and a second proxy node 850. The first proxy node 810 may for example correspond to the above-mentioned SIP proxy node 160, and the second proxy node 850 may correspond to the above-mentioned HTTP proxy node 170.

As illustrated, the first proxy node 810 may include a subscriber side interface 811 for communication with one or more client devices of subscribers, such as the UEs 10', 10", and a network side interface 812 for communication with service provider equipment, such as service provider system 200. Further, the first proxy node 810 may include a database interface 813 for connecting to a database for storing information elements for personalization of communication services, such as the above-mentioned CD cookie database 180.

Further, the first proxy node 810 includes one or more processors 820 coupled to the interfaces 811, 812, and 813, and a memory 830 coupled to the processor(s) 820. The memory 830 may include a Read Only Memory (ROM), e.g., a flash ROM, a Random Access Memory (RAM), e.g., a Dynamic RAM (DRAM) or Static RAM (SRAM), a mass storage, e.g., a hard disk or solid state disk, or the like. The memory 830 includes suitably configured program code to be executed by the processor(s) 820 so as to implement the above-described functionalities of a proxy node. In particular, the memory 830 may include various program code modules for causing the first proxy node 810 to perform processes as described above, e.g., corresponding to the method steps of Fig. 6.

As illustrated, the memory 830 may include a message forwarding module 831 for implementing the above-described functionalities of receiving, sending and forwarding messages of the given communication service. Further, the memory 830 may include a message processing module 832 for implementing the above-described functionalities of inserting the information element for personalization of communication services into a forwarded message or extracting the information element for personalization of communication services from the forwarded message. Further, the memory 830 may include an information element handling module 833 for implementing the above-described functionalities of storing the information element for personalization of communication services or retrieving a stored information element for personalization of communication services.

Similarly, the second proxy node 850 may include a subscriber side interface 851 for communication with one or more client devices of subscribers, such as the UEs 10', 10", and a network side interface 853 for communication with service provider equipment, such as service provider system 200. Further, the second proxy node 850 may include a database interface 852 for connecting to a database for storing information elements for personalization of communication services, such as the above-mentioned CD cookie database 180.

Further, the second proxy node 850 includes one or more processors 860 coupled to the interfaces 851, 852, and 853, and a memory 870 coupled to the processor(s) 860. The memory 870 may include a ROM, e.g., a flash ROM, a RAM, e.g., a DRAM or SRAM, a mass storage, e.g., a hard disk or solid state disk, or the like. The memory 870 includes suitably configured program code to be executed by the processor(s) 860 so as to implement the above-described functionalities of a proxy node. In particular, the memory 870 may include various program code modules for causing the first proxy node 850 to perform processes as described above, e.g., corresponding to the method steps of Fig. 6. Depending on the underlying application scenario, the second proxy node 850 may perform processes which are complementary to those performed by the first proxy node 810. For example, in some scenarios the first proxy node 810 may perform processes corresponding to method steps 610, 620, and 630, while the second proxy node 850 performs processes corresponding to method steps 640, 650, and 660. In other scenarios the first proxy node 810 may perform processes corresponding to method steps 640, 650, and 660, while the second proxy node 850 performs processes corresponding to method steps 610, 620, and 630.

As illustrated, the memory 870 of the second proxy node may include a message forwarding module 871 for implementing the above-described functionalities of receiving, sending and forwarding messages of the given communication service. Further, the memory 870 may include a message processing module 872 for implementing the above-described functionalities of inserting the information element for personalization of communication services into a forwarded message or extracting the information element for personalization of communication services from the forwarded message. Further, the memory 870 may include an information element handling module 873 for implementing the above-described functionalities of storing the information element for personalization of communication services or retrieving a stored information element for personalization of communication services.

It is to be understood that the structures as illustrated in Fig. 8 are merely schematic and that the communication network operator system may actually include further components which, for the sake of clarity, have not been illustrated, e.g., further interfaces or processors. Also, it is to be understood that the memories 830 or 870 may include further types of program code modules, which have not been illustrated, e.g., program code modules for implementing known functionalities of a SIP proxy node or HTTP proxy node, or functionalities of an IMS node. According to some embodiments, also a computer program may be provided for implementing functionalities of the communication network operator system, e.g., in the form of a physical medium storing the program code and/or other data to be stored in the memory 830 or 870 or by making the program code available for download or by streaming.

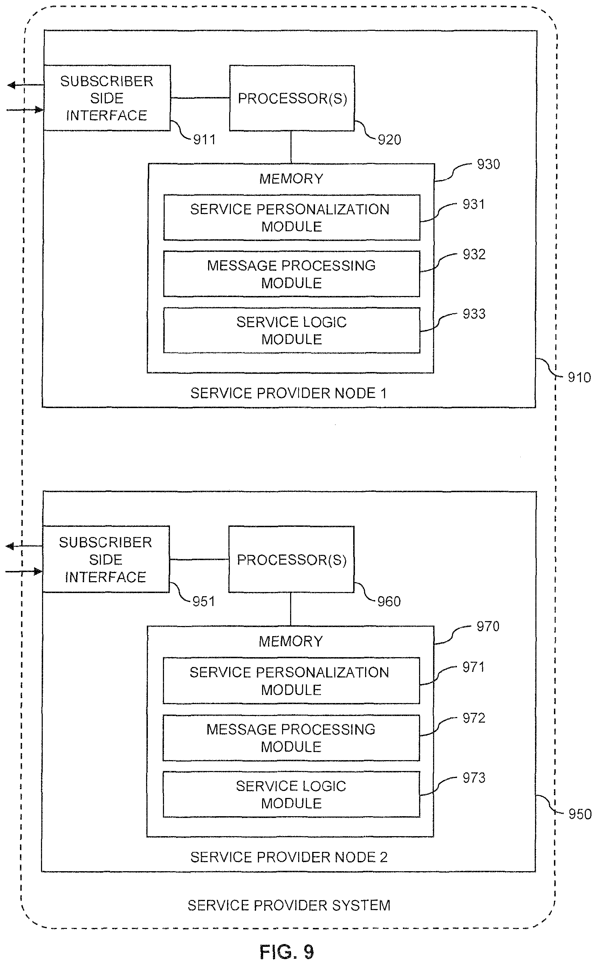

Fig. 9 illustrates exemplary structures which may be used for implementing the above concepts in a service provider system, such as the above-mentioned service provider system 200. In particular, Fig. 9 illustrates a processor based implementation of a service provider system including a first service provider node 910 and a second service provider node 950. The first service provider node 910 may for example correspond to the above-mentioned SIP service equipment 210, and the second proxy node 950 may correspond to the above-mentioned HTTP server 220.

As illustrated, the first service provider node 910 may include a subscriber side interface 911 for communication with one or more client devices of subscribers, such as the UEs 10', 10". Further, the first service provider node 910 includes one or more processors 920 coupled to the interface 911, and a memory 930 coupled to the processor(s) 920. The memory 930 may include a ROM, e.g., a flash ROM, a RAM, e.g., a DRAM or SRAM, a mass storage, e.g., a hard disk or solid state disk, or the like. The memory 930 includes suitably configured program code to be executed by the processor(s) 920 so as to implement the above-described functionalities of a node utilized for providing a communication service to subscribers. In particular, the memory 930 may include various program code modules for causing the first service provider node 910 to perform processes as described above, e.g., corresponding to the method steps of Fig. 7.

As illustrated, the memory 930 may include a service personalization module 931 for implementing the above-described functionalities of personalizing the communication service and/or determining the information element for personalization of services. Further, the memory 930 may include a message processing module 932 for implementing the above-described functionalities of inserting the information element for personalization of communication services into a message of the communication service or extracting the information element for personalization of communication services from the a received message of the communication service. Further, the memory 930 may include a service logic module 933 for implementing generic functionalities of the provided communication service.

Similarly, the second service provider node 950 may include a subscriber side interface 951 for communication with one or more client devices of subscribers, such as the UEs 10', 10". Further, the second service provider node 950 includes one or more processors 960 coupled to the interface 951, and a memory 970 coupled to the processor(s) 960. The memory 970 may include a ROM, e.g., a flash ROM, a RAM, e.g., a DRAM or SRAM, a mass storage, e.g., a hard disk or solid state disk, or the like. The memory 970 includes suitably configured program code to be executed by the processor(s) 960 so as to implement the above-described functionalities of a node utilized for providing a communication service to subscribers. In particular, the memory 970 may include various program code modules for causing the second service provider node 950 to perform processes as described above, e.g., corresponding to the method steps of Fig. 7. Depending on the underlying application scenario, the second service provider node 960 may perform processes which are complementary to those performed by the first service provider node 910. For example, in some scenarios the first service provider node 950 may perform processes corresponding to method steps 710, 720, 730, and 740, while the second service provider node 950 performs processes corresponding to method steps 750 and 760. In other scenarios the first service provider node 910 may perform processes corresponding to method steps 750 and 760, while the second provider node 950 performs processes corresponding to method steps 710, 720, 730, and 740.

As illustrated, the memory 970 may include a service personalization module 971 for implementing the above-described functionalities of personalizing the communication service and/or determining the information element for personalization of services. Further, the memory 970 may include a message processing module 972 for implementing the above-described functionalities of inserting the information element for personalization of communication services into a message of the communication service or extracting the information element for personalization of communication services from the a received message of the communication service. Further, the memory 970 may include a service logic module 973 for implementing generic functionalities of the provided communication service.

It is to be understood that the structures as illustrated in Fig. 9 are merely schematic and that the service provider system may actually include further components which, for the sake of clarity, have not been illustrated, e.g., further interfaces or processors. Also, it is to be understood that the memories 930 or 970 may include further types of program code modules, which have not been illustrated, e.g., program code modules for implementing known functionalities of a SIP service equipment, e.g., an IP based telephony system, or of an HTTP server. According to some embodiments, also a computer program may be provided for implementing functionalities of the service provider system, e.g., in the form of a physical medium storing the program code and/or other data to be stored in the memory 930 or 970 or by making the program code available for download or by streaming.

As can be seen, the concepts as described above may be used for efficiently personalizing multiple communication services. In particular, the information element for personalization of communication services may be applied for personalizing multiple different communication services, such as SIP based voice or multimedia communication and HTTP based web access, in a correlated manner. Further, since the information element is handled in the communication network, there are no compatibility issues with existing client devices, and the personalization may even be applied when the subscriber utilizes different devices for accessing the different communication services.

It is to be understood that the examples and embodiments as explained above are merely illustrative and susceptible to various modifications. For example, the illustrated concepts may be applied in connection with various network technologies, without limitation to the above-mentioned example of 3GPP cellular network technology and including WLAN (Wireless Local Area Network) or even fixed broadband access technologies. Further, the illustrated concepts may be applied in connection with various kinds and numbers of communication services, without limitation to the above-mentioned examples of SIP based IMS services and HTTP based web access. Further, the correlated personalization may also be applied in scenarios where the different communication services are utilized concurrently. Moreover, it is to be understood that the above concepts may be implemented by using correspondingly designed software to be executed by one or more processors of an existing device, or by using dedicated device hardware. Further, it should be noted that the illustrated nodes may each be implemented as a single device or as a system of multiple interacting devices.

## Claims

1. A method of controlling communication services in a communication network, the method comprising:
receiving a message (203; 305) of a first communication service from a service provider of the first communication service (220);
on the basis of the received message (203; 305; 409) of the first communication service, storing an information element for personalizing communication services;
forwarding (204;307;410) the received message (203; 305; 409) of the first communication service towards a subscriber (10);
receiving a message (205; 308; 501) of a second communication service from the subscriber (10);
inserting the stored information element into the received message (205; 308; 501) of the second communication service; and
forwarding (206;310;502) the received message (205; 308; 501) of the second communication service with the inserted information element towards a service provider of the second communication service (210).

2. The method according to claim 1,
wherein said forwarding of the received message (203; 305; 409) of the first communication service is performed to a first client device (10') utilized by the subscriber (10) for accessing the first communication service, and
wherein said receiving of the message (205; 308; 501) of the second communication service is performed from a second client device (10") utilized by the subscriber (10) for accessing the second communication service.

3. The method according to claim 1,
wherein the same client device (10', 10") is utilized by the subscriber (10) for accessing the first communication service and the second communication service, and
wherein said forwarding the message (203; 305; 409) of the first communication service is performed to the client device (10', 10") and said receiving of the message (205; 308; 501) of the second communication service is performed from the client device (10', 10").

4. The method according to any one of the preceding claims,
wherein said receiving of the message (203; 305; 409) of the first communication service, said storing of the identifier for personalizing communication services, and said forwarding of the received message (203; 305; 409) of the first communication service is performed by a first proxy node (160) responsible for forwarding messages (201, 203; 301, 305; 401, 403, 405, 409, 411) of the first communication service, and
wherein said receiving of the message (205; 308; 501) of the second communication service, said inserting of the identifier for personalizing communication services, and said forwarding of the message (205; 308; 501) of the second communication service is performed by a second proxy node (170) responsible for forwarding messages (205, 207; 308, 312; 501; 505) of the second communication service.

5. The method according to any one of the preceding claims,
wherein said storing of the information element for personalizing communication services is performed in a subscriber-specific manner,
wherein the method optionally comprises:
identifying the subscriber (10) on the basis of a data connection utilized for forwarding the received message (203; 305; 409) of the first communication service towards the subscriber (10) and/or on the basis of a data connection utilized for receiving the message (205; 308; 501) of the second communication service from the subscriber (10), and/or
identifying the subscriber (10) on the basis of authentication information included in the received message (203; 305; 409) of the first communication service and/or in the received message (205; 308; 501) of the second communication service.

6. The method according to any one of the preceding claims, comprising:
extracting the information element from the received message (203; 305; 409) of the first communication service, and
forwarding the received message (203; 305; 409) of the first communication service without the information element towards the subscriber (10).

7. The method according to any one of the preceding claims, comprising:
obtaining an indication of consent from the subscriber (10); and
storing the information element only in response to the indication of consent by the subscriber (10).

8. The method according to any one of the preceding claims,
wherein one of the first communication service and the second communication service is based on the Session Initiation Protocol, and
wherein the other of the first communication service and the second communication service is based on the Hypertext Transfer Protocol, and/or
wherein the information element comprises an identifier of the service provider.

9. A method of controlling communication services in a communication network, the method comprising:
personalizing a first communication service for a subscriber (10);
on the basis of the personalization of the first communication service, determining an information element for personalizing communication services;
inserting the information element for personalizing communication services into a message (203; 305; 409) of the first communication service;
sending the message (203; 305; 409) of the first communication service with the inserted information element towards the subscriber (10);
**characterized by** receiving a message (206; 310; 502) of a second communication service utilized by the subscriber (10), the message (206; 310; 502) of the second communication service including said information element for personalizing communication services; and
on the basis of the information element for personalizing communication services received with the message (206; 310; 502) of the second communication service, personalizing the second communication service for the subscriber (10).

10. The method according to claim 9,
wherein said sending of the message (203; 305; 409) of the first communication service is performed towards a first client device (10') utilized by the subscriber (10) for accessing the first communication service, and
wherein the message (206; 310; 502) of the second communication service originates from a second client device (10") utilized by the subscriber (10) for accessing the second communication service.

11. The method according to claim 9,
wherein the same client device (10', 10") is utilized by the subscriber (10) for accessing the first communication service and the second communication service, and
wherein said sending of the message (203; 305; 409) of the first communication service is performed towards the client device (10', 10"), and the message (206; 310; 502) of the second communication service originates from the client device (10', 10").

12. The method according to any one of claims 8 to 11,
wherein said personalizing of the first communication service, said determining of the information element for personalizing communication services, said inserting of the information element in the message of the first communication service, and said sending of the message of the first communication service is performed by a first node (210) responsible for providing the first communication service, and
wherein said receiving of the message (206; 310; 502) of the second communication service, and said personalizing of the second communication service is performed by a second node (220) responsible for providing the second communication service.

13. The method according to any one of claims 9-12,
wherein one of the first communication service and the second communication service is based on the Session Initiation Protocol, and
wherein the other of the first communication service and the second communication service is based on the Hypertext Transfer Protocol, and/or
wherein the information element comprises an identifier of the service provider.

14. A system (150), comprising:
a first proxy node (160) for forwarding messages (201, 203; 301, 305; 401, 403, 405, 409, 411) of a first communication service; and
a second proxy node (170) for forwarding messages (205, 207; 308, 312; 501; 505) of a second communication service,
wherein the first proxy node (160) is configured to:
- receive a message (203; 305; 409) of the first communication service from a service provider of the first communication service;
- on the basis of the received message (203; 305; 409) of the first communication service, store an information element for personalizing communication services; and
- forward the received message (203; 305; 409) of the first communication service towards a subscriber (10);
wherein the second proxy node (170) is configured to:
- receive a message (205; 308; 501) of a second communication service from the subscriber (10);
- insert the stored information element into the received message (205; 308; 501) of the second communication service; and
- forward the received message (205; 308; 501) of the second communication service with the inserted information element towards a service provider of the second communication service.

15. A system (200), comprising:
a first node (210) for providing a first communication service; and
a second node (220) for providing a second communication service,
wherein the first node (210) is configured to:
- personalize the first communication service for a subscriber (10);
- on the basis of the personalization of the first communication service, determine an information element for personalizing communication services;
- insert the information element for personalizing communication services into a message (203; 305; 409) of the first communication service; and
- send the message (203; 305; 409) of the first communication service with the inserted information element towards the subscriber (10);
**characterized in that** the second node (220) is configured to:
- receive a message (206; 310; 502) of the second communication service utilized by the subscriber (10), the message (206; 310; 502) of the second communication service including said information element for personalizing communication services; and
- on the basis of the information element for personalizing communication services received with the message (206; 310; 502) of the second communication service, personalize the second communication service for the subscriber (10).

16. A computer program or computer program product comprising program code to be executed by at least one processor (820, 860) of a communication network system (150), wherein execution of the program code causes the at least one processor (820, 860) to perform steps of a method according to any one of claims 1 to 8.

17. A computer program or computer program product comprising program code to be executed by at least one processor (920, 960) of a service provider system (200), wherein execution of the program code causes the at least one processor (920, 960) to perform steps of a method according to any one of claims 9 to 13.

## Patentansprüche

1. Verfahren zur Steuerung von Kommunikationsdiensten in einem Kommunikationsnetzwerk, wobei das Verfahren umfasst:
Empfangen einer Nachricht (203; 305) eines ersten Kommunikationsdienstes von einem Dienstanbieter des ersten Kommunikationsdienstes (220);
Speichern eines Informationselements zum Personalisieren von Kommunikationsdiensten auf der Basis der empfangenen Nachricht (203; 305; 409) des ersten Kommunikationsdienstes;
Weiterleiten (204;307;410) der empfangenen Nachricht (203; 305; 409) des ersten Kommunikationsdienstes an einen Teilnehmer (10);
Empfangen einer Nachricht (205; 308; 501) eines zweiten Kommunikationsdienstes vom Teilnehmer (10);
Einfügen des gespeicherten Informationselements in die empfangene Nachricht (205; 308; 501) des zweiten Kommunikationsdienstes; und
Weiterleiten (206;310;502) der empfangenen Nachricht (205; 308; 501) des zweiten Kommunikationsdienstes mit dem eingefügten Informationselement an einen Dienstanbieter des zweiten Kommunikationsdienstes (210) .

2. Verfahren nach Anspruch 1,
wobei das Weiterleiten der empfangenen Nachricht (203; 305; 409) des ersten Kommunikationsdienstes an eine erste Client-Vorrichtung (10') durchgeführt wird, die vom Teilnehmer (10) zum Zugreifen auf den ersten Kommunikationsdienst verwendet wird, und
wobei das Empfangen der Nachricht (205; 308; 501) des zweiten Kommunikationsdienstes von einer zweiten Client-Vorrichtung (10") durchgeführt wird, die vom Teilnehmer (10) zum Zugreifen auf den zweiten Kommunikationsdienst verwendet wird.

3. Verfahren nach Anspruch 1,
wobei vom Teilnehmer (10) zum Zugreifen auf den ersten Kommunikationsdienst und den zweiten Kommunikationsdienst die gleiche Client-Vorrichtung (10', 10") verwendet wird, und
wobei das Weiterleiten der Nachricht (203; 305; 409) des ersten Kommunikationsdienstes an die Client-Vorrichtung (10', 10") durchgeführt wird, und das Empfangen der Nachricht (205; 308; 501) des zweiten Kommunikationsdienstes von der Client-Vorrichtung (10', 10") durchgeführt wird.

4. Verfahren nach einem der vorhergehenden Ansprüche,
wobei das Empfangen der Nachricht (203; 305; 409) des ersten Kommunikationsdienstes, das Speichern der Kennung zum Personalisieren von Kommunikationsdiensten und das Weiterleiten der empfangenen Nachricht (203; 305; 409) des ersten Kommunikationsdienstes durch einen ersten Proxy-Knoten (160) durchgeführt werden, der für das Weiterleiten von Nachrichten (201, 203; 301, 305; 401, 403, 405, 409, 411) des ersten Kommunikationsdienstes verantwortlich ist, und
wobei das Empfangen der Nachricht (205; 308; 501) des zweiten Kommunikationsdienstes, das Einfügen der Kennung zum Personalisieren von Kommunikationsdiensten und das Weiterleiten der Nachricht (205; 308; 501) des zweiten Kommunikationsdienstes durch einen zweiten Proxy-Knoten (170) durchgeführt werden, der für das Weiterleiten von Nachrichten (205, 207; 308, 312; 501; 505) des zweiten Kommunikationsdienstes verantwortlich ist.

5. Verfahren nach einem der vorhergehenden Ansprüche,
wobei das Speichern des Informationselements zum Personalisieren von Kommunikationsdiensten auf eine teilnehmerspezifische Weise durchgeführt wird,
wobei das Verfahren optional umfasst:
Identifizieren des Teilnehmers (10) auf der Basis einer Datenverbindung, die zum Weiterleiten der empfangenen Nachricht (203; 305; 409) des ersten Kommunikationsdienstes an den Teilnehmer (10) verwendet wird, und/oder auf der Basis einer Datenverbindung, die zum Empfangen der Nachricht (205; 308; 501) des zweiten Kommunikationsdienstes vom Teilnehmer (10) verwendet wird, und/oder
Identifizieren des Teilnehmers (10) auf der Basis von Authentisierungsinformationen, die in der empfangenen Nachricht (203; 305; 409) des ersten Kommunikationsdienstes und/oder in der empfangenen Nachricht (205; 308; 501) des zweiten Kommunikationsdienstes enthalten sind.

6. Verfahren nach einem der vorhergehenden Ansprüche, umfassend:
Extrahieren des Informationselements aus der empfangenen Nachricht (203; 305; 409) des zweiten Kommunikationsdienstes; und
Weiterleiten der empfangenen Nachricht (203; 305; 409) des ersten Kommunikationsdienstes ohne das Informationselement an den Teilnehmer (10).

7. Verfahren nach einem der vorhergehenden Ansprüche, umfassend:
Einholen einer Zustimmungsangabe vom Teilnehmer (10); und
Speichern des Informationselements nur in Reaktion auf die Zustimmungsangabe durch den Teilnehmer (10).

8. Verfahren nach einem der vorhergehenden Ansprüche,
wobei einer des ersten Kommunikationsdienstes und des zweiten Kommunikationsdienstes auf dem Sitzungseinleitungsprotokoll basiert, und
wobei der andere des ersten Kommunikationsdienstes und des zweiten Kommunikationsdienstes auf dem Hypertext-Transferprotokoll basiert, und/oder
wobei das Informationselement eine Kennung des Dienstanbieters umfasst.

9. Verfahren zur Steuerung von Kommunikationsdiensten in einem Kommunikationsnetzwerk, wobei das Verfahren umfasst:
Personalisieren eines ersten Kommunikationsdienstes für einen Teilnehmer (10);
Bestimmen eines Informationselements zum Personalisieren von Kommunikationsdiensten auf der Basis der Personalisierung des ersten Kommunikationsdienstes;
Einfügen des Informationselements zum Personalisieren von Kommunikationsdiensten in eine Nachricht (203; 305; 409) des ersten Kommunikationsdienstes;
Senden der Nachricht (203; 305; 409) des ersten Kommunikationsdienstes mit dem eingefügten Informationselement an den Teilnehmer (10);
**gekennzeichnet durch**
Empfangen einer Nachricht (206; 310; 502) eines zweiten Kommunikationsdienstes, der vom Teilnehmer (10) verwendet wird, wobei die Nachricht (206; 310; 502) des zweiten Kommunikationsdienstes das Informationselement zum Personalisieren von Kommunikationsdiensten umfasst; und
Personalisieren des zweiten Kommunikationsdienstes für den Teilnehmer (10) auf der Basis des Informationselements zum Personalisieren von Kommunikationsdiensten, das mit der Nachricht (206; 310; 502) des zweiten Kommunikationsdienstes empfangen wird.

10. Verfahren nach Anspruch 9,
wobei das Senden der Nachricht (203; 305; 409) des ersten Kommunikationsdienstes an eine erste Client-Vorrichtung (10') durchgeführt wird, die vom Teilnehmer (10) zum Zugreifen auf den ersten Kommunikationsdienst verwendet wird, und
wobei die Nachricht (206; 310; 502) des zweiten Kommunikationsdienstes von einer zweiten Client-Vorrichtung (10") abgeht, die vom Teilnehmer (10) zum Zugreifen auf den zweiten Kommunikationsdienst verwendet wird.

11. Verfahren nach Anspruch 9,
wobei vom Teilnehmer (10) zum Zugreifen auf den ersten Kommunikationsdienst und den zweiten Kommunikationsdienst die gleiche Client-Vorrichtung (10', 10") verwendet wird, und
wobei das Senden der Nachricht (203; 305; 409) des ersten Kommunikationsdienstes an die Client-Vorrichtung (10', 10") durchgeführt wird, und die Nachricht (206; 310; 502) des zweiten Kommunikationsdienstes von der Client-Vorrichtung (10', 10") abgeht.

12. Verfahren nach einem der Ansprüche 8 bis 11,
wobei das Personalisieren des ersten Kommunikationsdienstes, das Bestimmen des Informationselements zum Personalisieren von Kommunikationsdiensten, das Einfügen des Informationselements in die Nachricht des ersten Kommunikationsdienstes und das Senden der Nachricht des ersten Kommunikationsdienstes durch einen ersten Knoten (210) durchgeführt werden, der für das Bereitstellen des ersten Kommunikationsdienstes verantwortlich ist, und
wobei das Empfangen der Nachricht (206; 310; 502) des zweiten Kommunikationsdienstes und das Personalisieren des zweiten Kommunikationsdienstes durch einen zweiten Knoten (220) durchgeführt werden, der für das Bereitstellen des zweiten Kommunikationsdienstes verantwortlich ist.

13. Verfahren nach einem der Ansprüche 9 bis 12,
wobei einer des ersten Kommunikationsdienstes und des zweiten Kommunikationsdienstes auf dem Sitzungseinleitungsprotokoll basiert, und
wobei der andere des ersten Kommunikationsdienstes und des zweiten Kommunikationsdienstes auf dem Hypertext-Transferprotokoll basiert, und/oder
wobei das Informationselement eine Kennung des Dienstanbieters umfasst.

14. System (150), umfassend:
einen ersten Proxy-Knoten (160) zum Weiterleiten von Nachrichten (201, 203; 301, 305; 401, 403, 405, 409, 411) eines ersten Kommunikationsdienstes; und
einen zweiten Proxy-Knoten (170) zum Weiterleiten von Nachrichten (205, 207; 308, 312; 501; 505) eines zweiten Kommunikationsdienstes;
wobei der erste Proxy-Knoten (160) konfiguriert ist zum:
- Empfangen einer Nachricht (203; 305; 409) des ersten Kommunikationsdienstes von einem Dienstanbieter des ersten Kommunikationsdienstes;
- Speichern eines Informationselements zum Personalisieren von Kommunikationsdiensten auf der Basis der empfangenen Nachricht (203; 305; 409) des ersten Kommunikationsdienstes; und,
- Weiterleiten der empfangenen Nachricht (203; 305; 409) des ersten Kommunikationsdienstes an einen Teilnehmer (10);
wobei der zweite Proxy-Knoten (170) konfiguriert ist zum:
- Empfangen einer Nachricht (205; 308; 501) eines zweiten Kommunikationsdienstes vom Teilnehmer (10) ;
- Einfügen des gespeicherten Informationselements in die empfangene Nachricht (205; 308; 501) des zweiten Kommunikationsdienstes; und
- Weiterleiten der empfangenen Nachricht (205; 308; 501) des zweiten Kommunikationsdienstes mit dem eingefügten Informationselement an einen Dienstanbieter des zweiten Kommunikationsdienstes.

15. System (200), umfassend:
einen ersten Knoten (210) zum Bereitstellen eines ersten Kommunikationsdienstes; und
einen zweiten Knoten (220) zum Bereitstellen eines zweiten Kommunikationsdienstes;
wobei der erste Knoten (210) konfiguriert ist zum:
- Personalisieren die ersten Kommunikationsdienstes für einen Teilnehmer (10);
- Bestimmen eines Informationselements zum Personalisieren von Kommunikationsdiensten auf der Basis der Personalisierung des ersten Kommunikationsdienstes;
- Einfügen des Informationselements zum Personalisieren von Kommunikationsdiensten in eine Nachricht (203; 305; 409) des ersten Kommunikationsdienstes; und,
- Senden der Nachricht (203; 305; 409) des ersten Kommunikationsdienstes mit dem eingefügten Informationselement an den Teilnehmer (10);
**dadurch gekennzeichnet, dass** der zweite Knoten (220) konfiguriert ist zum:
- Empfangen einer Nachricht (206; 310; 502) des zweiten Kommunikationsdienstes, der vom Teilnehmer (10) verwendet wird, wobei die Nachricht (206; 310; 502) des zweiten Kommunikationsdienstes das Informationselement zum Personalisieren von Kommunikationsdiensten umfasst; und
- Personalisieren des zweiten Kommunikationsdienstes für den Teilnehmer (10) auf der Basis des Informationselements zum Personalisieren von Kommunikationsdiensten, das mit der Nachricht (206; 310; 502) des zweiten Kommunikationsdienstes empfangen wird.

16. Computerprogramm oder Computerprogrammprodukt, umfassend Programmcode, der durch mindestens einen Prozessor (820, 860) eines Kommunikationsnetzwerksystems (150) ausgeführt werden soll, wobei die Ausführung des Programmcodes den mindestens einen Prozessor (820, 860) zum Ausführen von Schritten eines Verfahrens nach einem der Ansprüche 1 bis 8 veranlasst.

17. Computerprogramm oder Computerprogrammprodukt, umfassend Programmcode, der durch mindestens einen Prozessor (920, 960) eines Dienstanbietersystems (200) ausgeführt werden soll, wobei die Ausführung des Programmcodes den mindestens einen Prozessor (920, 960) zum Ausführen von Schritten eines Verfahrens nach einem der Ansprüche 9 bis 13 veranlasst.

## Revendications

1. Procédé de commande de services de communications dans un réseau de communications, le procédé comprenant :
la réception d'un message (203 ; 305) d'un premier service de communications en provenance d'un fournisseur de services du premier service de communications (220) ;
sur la base du message reçu (203 ; 305 ; 409) du premier service de communications, la mémorisation d'un élément d'information pour la personnalisation de services de communications ;
le transfert (204 ; 307 ; 410) du message reçu (203 ; 305 ; 409) du premier service de communications vers un abonné (10) ;
la réception d'un message (205 ; 308 ; 501) d'un deuxième service de communications en provenance de l'abonné (10) ;
l'insertion de l'élément d'information mémorisé dans le message reçu (205 ; 308 ; 501) du deuxième service de communications ; et
le transfert (206 ; 310 ; 502) du message reçu (205 ; 308 ; 501) du deuxième service de communications avec l'élément d'information inséré vers un fournisseur de services du deuxième service de communications (210).

2. Procédé selon la revendication 1,
dans lequel ledit transfert du message reçu (203 ; 305 ; 409) du premier service de communications est effectué vers un premier dispositif client (10') utilisé par l'abonné (10) pour accéder au premier service de communications, et
dans lequel ladite réception du message (205 ; 308 ; 501) du deuxième service de communications est effectuée en provenance d'un deuxième dispositif client (10'') utilisé par l'abonné (10) pour accéder au deuxième service de communications.

3. Procédé selon la revendication 1,
dans lequel le même dispositif client (10', 10'') est utilisé par l'abonné (10) pour accéder au premier service de communications et au deuxième service de communications, et
dans lequel ledit transfert du message (203 ; 305 ; 409) du premier service de communications est effectué vers le dispositif client (10', 10'') et ladite réception du message (205 ; 308 ; 501) du deuxième service de communications est effectuée en provenance du dispositif client (10', 10'').

4. Procédé selon l'une quelconque des revendications précédentes,
dans lequel ladite réception du message (203 ; 305 ; 409) du premier service de communications, ladite mémorisation de l'identifiant pour la personnalisation de services de communications, et ledit transfert du message reçu (203 ; 305 ; 409) du premier service de communications sont effectués par un premier nœud proxy (160) responsable du transfert de messages (201, 203 ; 301, 305 ; 401, 403, 405, 409, 411) du premier service de communications, et
dans lequel ladite réception du message (205 ; 308 ; 501) du deuxième service de communications, ladite insertion de l'identifiant pour la personnalisation de services de communications, et ledit transfert du message (205 ; 308 ; 501) du deuxième service de communications sont effectués par un deuxième nœud proxy (170) responsable du transfert de messages (205, 207 ; 308, 312 ; 501 ; 505) du deuxième service de communications.

5. Procédé selon l'une quelconque des revendications précédentes,
dans lequel ladite mémorisation de l'élément d'information pour la personnalisation de services de communications est effectuée d'une manière spécifique à l'abonné,
dans lequel le procédé comprend facultativement :
l'identification de l'abonné (10) sur la base d'une connexion de données utilisée pour le transfert du message reçu (203 ; 305 ; 409) du premier service de communications vers l'abonné (10) et/ou sur la base d'une connexion de données utilisée pour la réception du message (205 ; 308 ; 501) du deuxième service de communications en provenance de l'abonné (10), et/ou
l'identification de l'abonné (10) sur la base d'informations d'authentification incluses dans le message reçu (203 ; 305 ; 409) du premier service de communications et/ou dans le message reçu (205 ; 308 ; 501) du deuxième service de communications.

6. Procédé selon l'une quelconque des revendications précédentes, comprenant :
l'extraction de l'élément d'information du message reçu (203 ; 305 ; 409) du premier service de communications, et
le transfert du message reçu (203 ; 305 ; 409) du premier service de communications sans l'élément d'information vers l'abonné (10).

7. Procédé selon l'une quelconque des revendications précédentes, comprenant :
l'obtention d'une indication de consentement de l'abonné (10) ; et
la mémorisation de l'élément d'information uniquement en réponse à l'indication de consentement de l'abonné (10) .

8. Procédé selon l'une quelconque des revendications précédentes,
dans lequel l'un du premier service de communications et du deuxième service de communications est basé sur le protocole d'ouverture de session, et
dans lequel l'autre du premier service de communications et du deuxième service de communications est basé sur le protocole de transfert hypertexte, et/ou
dans lequel l'élément d'information comprend un identifiant du fournisseur de services.

9. Procédé de commande de services de communications dans un réseau de communications, le procédé comprenant :
la personnalisation d'un premier service de communications pour un abonné (10) ;
sur la base de la personnalisation du premier service de communications, la détermination d'un élément d'information pour la personnalisation de services de communications ;
l'insertion de l'élément d'information pour la personnalisation de services de communications dans un message (203 ; 305 ; 409) du premier service de communications ;
l'envoi du message (203 ; 305 ; 409) du premier service de communications avec l'élément d'information inséré vers l'abonné (10) ;
**caractérisé par**
la réception d'un message (206 ; 310 ; 502) d'un deuxième service de communications utilisé par l'abonné (10), le message (206 ; 310 ; 502) du deuxième service de communications incluant ledit élément d'information pour la personnalisation de services de communications ;
sur la base de l'élément d'information pour la personnalisation de services de communications reçu avec le message (206 ; 310 ; 502) du deuxième service de communications, la personnalisation du deuxième service de communications pour l'abonné (10).

10. Procédé selon la revendication 9,
dans lequel ledit envoi du message reçu (203 ; 305 ; 409) du premier service de communications est effectué vers un premier dispositif client (10') utilisé par l'abonné (10) pour accéder au premier service de communications, et
dans lequel le message (206 ; 310 ; 502) du deuxième service de communications provient d'un deuxième dispositif client (10") utilisé par l'abonné (10) pour accéder au deuxième service de communications.

11. Procédé selon la revendication 9,
dans lequel le même dispositif client (10', 10") est utilisé par l'abonné (10) pour accéder au premier service de communications et au deuxième service de communications, et
dans lequel ledit envoi du message (203 ; 305 ; 409) du premier service de communications est effectué vers le dispositif client (10', 10") et le message (206 ; 310 ; 502) du deuxième service de communications provient du dispositif client (10', 10").

12. Procédé selon l'une quelconque des revendications 8 à 11,
dans lequel ladite personnalisation du premier service de communications, ladite détermination de l'élément d'information pour la personnalisation de services de communications, ladite insertion de l'élément d'information dans le message du premier service de communications, et ledit envoi du message du premier service de communications sont effectués par un premier nœud (210) responsable de fournir le premier service de communications, et
dans lequel ladite réception du message (206 ; 310 ; 502) du deuxième service de communications et ladite personnalisation du deuxième service de communications sont effectuées par un deuxième nœud (220) responsable de fournir le deuxième service de communications.

13. Procédé selon l'une quelconque des revendications 9 à 12,
dans lequel l'un du premier service de communications et du deuxième service de communications est basé sur le protocole d'ouverture de session, et
dans lequel l'autre du premier service de communications et du deuxième service de communications est basé sur le protocole de transfert hypertexte, et/ou dans lequel l'élément d'information comprend un identifiant du fournisseur de services.

14. Système (150), comprenant :
un premier nœud proxy (160) pour le transfert de messages (201, 203 ; 301, 305 ; 401, 403, 405, 409, 411) d'un premier service de communications ; et
un deuxième nœud proxy (170) pour le transfert de messages (205, 207 ; 308, 312 ; 501 ; 505) d'un deuxième service de communications,
dans lequel le premier nœud proxy (160) est configuré pour :
- la réception d'un message (203 ; 305 ; 409) du premier service de communications en provenance d'un fournisseur de services du premier service de communications ;
- sur la base du message reçu (203 ; 305 ; 409) du premier service de communications, la mémorisation d'un élément d'information pour la personnalisation de services de communications ; et
- le transfert du message reçu (203 ; 305 ; 409) du premier service de communications vers un abonné (10) ;
dans lequel le deuxième nœud proxy (170) est configuré pour :
- la réception d'un message (205 ; 308 ; 501) d'un deuxième service de communications en provenance de l'abonné (10) ;
- l'insertion de l'élément d'information mémorisé dans le message reçu (205 ; 308 ; 501) du deuxième service de communications ; et
- le transfert du message reçu (205 ; 308 ; 501) du deuxième service de communications avec l'élément d'information inséré vers un fournisseur de services du deuxième service de communications.

15. Système (200), comprenant :
un premier nœud (210) pour la fourniture d'un premier service de communications ; et
un deuxième nœud (220) pour la fourniture d'un deuxième service de communications,
dans lequel le premier nœud (210) est configuré pour :
- la personnalisation du premier service de communications pour un abonné (10) ;
- sur la base de la personnalisation du premier service de communications, la détermination d'un élément d'information pour la personnalisation de services de communications ;
- l'insertion de l'élément d'information pour la personnalisation de services de communications dans un message (203 ; 305 ; 409) du premier service de communications ; et
- l'envoi du message (203 ; 305 ; 409) du premier service de communications avec l'élément d'information inséré vers l'abonné (10) ;
**caractérisé en ce que** le deuxième nœud (220) est configuré pour :
- la réception d'un message (206 ; 310 ; 502) du deuxième service de communications utilisé par l'abonné (10), le message (206 ; 310 ; 502) du deuxième service de communications incluant ledit élément d'information pour la personnalisation de services de communications ; et
- sur la base de l'élément d'information pour la personnalisation de services de communications reçu avec le message (206 ; 310 ; 502) du deuxième service de communications, la personnalisation du deuxième service de communications pour l'abonné (10) .

16. Programme informatique ou produit de programme informatique comprenant un code de programme à exécuter par au moins un processeur (820, 860) d'un système de réseau de communications (150), dans lequel l'exécution du code de programme amène l'au moins un processeur (820, 860) à effectuer des étapes d'un procédé selon l'une quelconque des revendications 1 à 8.

17. Programme informatique ou produit de programme informatique comprenant un code de programme à exécuter par au moins un processeur (920, 960) d'un système de fournisseur de services (200), dans lequel l'exécution du code de programme amène l'au moins un processeur (920, 960) à effectuer des étapes d'un procédé selon l'une quelconque des revendications 9 à 13.
